(19) Europäisches Patentamt
European Patent Office
Office européen des brevets

(11) EP 4 455 755 B1

(12) **EUROPEAN PATENT SPECIFICATION**

(45) Date of publication and mention of the grant of the patent:
**03.06.2026 Bulletin 2026/23**

(21) Application number: **22911837.7**

(22) Date of filing: **20.12.2022**

(51) International Patent Classification (IPC):
***G02B 13/00** (2006.01)* ***G02B 13/18** (2006.01)*
***G02B 9/64** (2006.01)* ***G02B 15/14** (2006.01)*
***G03B 17/12** (2021.01)* ***H04N 23/00** (2023.01)*

(52) Cooperative Patent Classification (CPC):
**G03B 17/12; G02B 9/64; G02B 13/0045; G02B 13/009; G02B 15/143503**

(86) International application number:
**PCT/KR2022/020794**

(87) International publication number:
**WO 2023/121204 (29.06.2023 Gazette 2023/26)**

(54) **OPTICAL SYSTEM, AND OPTICAL MODULE AND CAMERA MODULE COMPRISING SAME**

OPTISCHES SYSTEM UND OPTISCHES MODUL UND KAMERAMODUL DAMIT

SYSTÈME OPTIQUE, ET MODULE OPTIQUE ET MODULE DE CAMÉRA LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.12.2021 KR 20210183217**
**12.12.2022 KR 20220173155**

(43) Date of publication of application:
**30.10.2024 Bulletin 2024/44**

(73) Proprietor: **LG INNOTEK CO., LTD.**
**Seoul 07796 (KR)**

(72) Inventors:
- **SIN, Doo Shik**
  **Seoul 07796 (KR)**
- **SHIM, Ju Yong**
  **Seoul 07796 (KR)**

(74) Representative: **M. Zardi & Co S.A.**
**Via G. B. Pioda, 6**
**6900 Lugano (CH)**

(56) References cited:
**JP-A- 2005 078 038** **JP-A- 2018 025 579**
**JP-A- 2019 139 173** **JP-A- 2019 139 173**
**KR-A- 20150 070 876** **KR-A- 20210 060 316**
**US-A- 4 806 003** **US-A1- 2008 106 800**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

[Technical Field]

An embodiment relates to an optical system, an optical module and a camera module having the same.

[Background Art]

A camera module photographs an object and stores it as an image or video. The camera module is applied to various applications. For example, the camera module may be miniaturized. Accordingly, the camera module is applied to a portable device such as a smart phone, a tablet PC, or a laptop computer. In addition, the camera module is applied to drone or vehicle.
The camera module includes an imaging lens for imaging an image and an image sensor for converting the image into an electrical signal. The camera module may perform an autofocus (AF) function of aligning focal length of lenses by automatically adjusting a distance between an image sensor and an imaging lens. In addition, the camera module may perform a zooming function of zooming up or zooming out by increasing or decreasing the magnification of a distant object by a zoom lens.
In addition, the camera module may correct or prevent image shaking using image stabilization (IS) technology.
The most important configuration of the camera module for obtaining an image is an imaging lens for imaging an image. Recently, interest in high image quality and high resolution is increasing. Accordingly, research on an optical system including a plurality of lenses is being conducted. For example, research using a plurality of imaging lenses having positive or negative refractive power is being conducted for a high-performance optical system. However, if the optical system includes a plurality of lenses, the total length of the optical system may increase. In addition, it may be difficult to improve optical characteristics and aberration characteristics of the optical system.
Meanwhile, if the optical system includes a plurality of lenses, the position of any one of the plurality of lenses may be controlled. Alternatively, the position of a lens group including two or more lenses may be controlled. Accordingly, the optical system may perform a zoom or autofocus (AF) function. However, when the lens or the lens group performs the function, the moving distance of the lens or the lens group may greatly increase. Accordingly, a device including the optical system may require a lot of energy. In addition, there is a problem in that a design considering the moving distance is required.
In addition, if the optical system includes a plurality of lenses, the total length or height of the optical system may be increased by the thickness, interval, or size of the plurality of lenses. Accordingly, the thickness and size of the device including the optical system may increase.
Therefore, there is a need for a new optical system and an optical module capable of solving the above-described problem.
Prior art US 4 806 003 A discloses an optical system according to the preamble of claim 1.

[Disclosure]

[Technical Problem]

An Embodiment provides an optical system having improved optical characteristics, an optical module and a camera module including the same.
In addition, the embodiment provides an optical system capable of providing images of various magnifications, an optical module and a camera module including the same.
In addition, the embodiment provides an optical system having a small size, an optical module and a camera module including the same.
In addition, the embodiment provides an optical system applicable to a folded camera having a thin thickness, an optical module and a camera module including the same.

[Technical Solution]

An optical system according to an embodiment comprises a first lens group, a second lens group, and a third lens group sequentially disposed along an optical axis from the object side to the sensor side, each including at least one lens, the first lens group includes a first lens, a second lens, and a third lens sequentially disposed along the optical axis in a direction from the object side to the sensor side, the second lens group includes a fourth lens and a fifth lens sequentially disposed along the optical axis in a direction from the object side to the sensor side, the third lens group includes a sixth lens, a seventh lens, and an eighth lens sequentially disposed along the optical axis from the object side to the sensor side, the second lens group and the third lens group move toward the sensor side (first mode) and move toward the object side (third mode), the third lens has negative (-) refractive power, the fourth lens has a positive (+) refractive power, the fifth lens has negative (-) refractive power, the third lens and the fourth lens include glass, and the optical system satisfies the following equation.

[Equation]

$$13 < EFL < 29$$

(In the equation, EFL means the effective focal length (mm) of the optical system.)

[Advantageous Effects]

An optical system, an optical module, and a camera module according to an embodiment have improved optical characteristics. In detail, the effective focal length (EFL) may be controlled by moving at least one of a plurality of lens groups. Accordingly, an image having a desired magnification may be obtained.

In addition, the embodiment minimizes the moving distance of the moving lens group. Accordingly, power consumption required when moving the lens group may be reduced.

In addition, the embodiment has a constant TTL regardless of the magnification in the first to third modes. Accordingly, the optical system and the camera module including the same have a slim size.

In addition, at least one of the lenses of the optical system and the camera module according to the embodiment has a non-circular shape. Accordingly, the optical system has improved optical performance. Also, the optical system has a small size.

In addition, the optical system and the camera module according to the embodiment include a light path changing member. Accordingly, the optical system may be applied to a folded camera having a small thickness. In addition, a device including the camera module may be manufactured with a thin thickness.

[Description of Drawings]

FIG. 1 is a configuration diagram of an optical system according to an embodiment operating in a first mode.
FIG. 2 is a view for explaining a total track length (TTL) and a back focal length (BFL) of an optical system operating in a first mode.
FIG. 3 is a configuration diagram of the optical system according to the embodiment operating in a second mode.
FIG. 4 is a view for explaining total track length and back focal length of the optical system operating in the second mode.
FIG. 5 is a configuration diagram of the optical system according to the embodiment operating in a third mode.
FIG. 6 is a view for explaining total track length and back focal length of the optical system operating in the third mode.
FIG. 7 is a view for explaining a lens having a non-circular shape.
FIGS. 8 to 17 are tables for explaining the first to eighth lenses of the optical system according to a first embodiment.
FIG. 18 is a graph of MTF characteristics when the optical system according to the first embodiment operates in the first mode.
FIG. 19 is a graph of an aberration when the optical system according to the first embodiment operates in the first mode.
FIG. 20 is a graph of MTF characteristics when the optical system according to the first embodiment operates in the second mode.
FIG. 21 is a graph of an aberration when the optical system according to the first embodiment operates in the second mode.
FIG. 22 is a graph of MTF characteristics when the optical system according to the first embodiment operates in the third mode.
FIG. 23 is a graph of an aberration when the optical system according to the first embodiment operates in the third mode.
FIGS. 24 to 29 are tables for explaining the first to eighth lenses of the optical system according to the second embodiment.
FIG. 30 is a view illustrating that a camera module according to an embodiment is applied to a mobile terminal.

[Modes of the Invention]

Hereinafter, preferred embodiments of the invention will be described in detail with reference to the accompanying drawings.

A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component.

In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the following description, a first lens means a lens closest to an object side. Also, a last lens means the lens closest to a sensor side. In addition, unless otherwise noted, the radius, effective diameter, thickness, distance, Back Focal Length, Total track length or Total Top Length of the lens is in millimeter (mm). Also, a shape of the lens is based on the optical axis of the lens. For example, that the object-side surface of the lens is convex is defined as that the optical axis part of the object-side surface of the lens is convex. That is, it does not mean that the periphery of the optical axis of the object-side surface of the lens is convex. Accordingly, even when the object-side surface of the lens is described as convex, the peripheral portion of the optical axis of the object-side surface of the lens may be concave. In addition, the thickness and curvature radius of the lens were measured based on the optical axis of the lens. In addition, the object-side surface is defined as a surface of a lens facing the object-side with respect to the optical axis. In addition, the sensor side is defined as a surface of a lens facing an imaging surface based on the optical axis.

In addition, the thickness of the edge of the lens described below may be the thickness at the non-D-cutcorner.

Referring to FIGS. 1 to 5, an optical system 1000 according to an embodiment includes a plurality of lenses.

In the drawing, it is shown that the optical system 1000 includes eight lenses. However, the embodiment is not limited thereto. Hereinafter, for convenience of explanation, it will be described that the optical system 1000 includes eight lenses.

The optical system 1000 includes a first lens 110, a second lens 120, a third lens 130, a fourth lens 140, a fifth lens 150, a sixth lens 160, a seventh lens 170, and an eighth lens 180.

The first lens 110 to the eighth lens 180 are sequentially disposed from the object side to the sensor side.

The first lens 110 to the eighth lens 180 are sequentially disposed along the optical axis OA. Accordingly, the centers of the first lens 110 to the eighth lens 180 may coincide with the optical axis OA of the optical system 1000.

Light corresponding to object information passes through the first lens 110 to the eighth lens 180 and is incident on the image sensor unit 300.

Each of the first lens 110 to the eighth lens 180 includes an effective region and an ineffective region.

The effective region is defined as a region where optical characteristics are implemented in the first lens 110 to the eighth lens 180. The effective region is a region through which the light passes. Also, the effective region is a region where incident light is refracted.

That is, the effective region may be a clear aperture of the first lens 110 to the eighth lens 180.

The ineffective region is disposed in the periphery of the effective region. That is, a region other than the effective region of the first lens 110 to the eighth lens 180 is an ineffective region. The ineffective region may be a region in which the light is not incident. The ineffective region area may be a region unrelated to the optical characteristics. Alternatively, the ineffective region may be a region where the light is incident but has no optical characteristics. Alternatively, the ineffective region may be a region fixed to a barrel (not shown) accommodating the lens. That is, the ineffective region may be a flange portion fixed to the barrel.

In addition, the size of the effective region may have a measurement error of about ±0.4 mm depending on a measurement method or the like. For example, the size of the effective region may be 2 mm or less, 1 mm or less, or 0.3 mm or less of the inner diameter of the flange portion.

The optical system 1000 may include an aperture stop (not shown) for adjusting the amount of incident light. The aperture stop may be disposed between two adjacent lenses among the first lens 110 to the eighth lens 180. For example, the aperture stop may be disposed between the third lens 130 and the fourth lens 140.

In addition, at least one lens of the first lens 110 to the eighth lens 180 may serve as the aperture stop. For example, an object-side surface or a sensor-side surface of any one of the first lens 110 to the eighth lens 180 may serve as the aperture stop. For example, the object-side surface of the fourth lens 140 may serve as the aperture stop.

The optical system 1000 forms an optical module 2000. For example, the optical module 2000 may include the optical system 1000, a light path changing member disposed in front of the optical system 1000, an image sensor unit 300 disposed behind the optical system 1000, and a filter unit 500.

The image sensor unit 300 detects light. In detail, the image sensor unit 300 detects light that has sequentially passed through the first to eighth lenses. For example, the image sensor unit 300 may include a charge coupled device (CCD) or a complementary metal oxide semiconductor (CMOS).

The filter unit 500 is disposed between the optical system 1000 and the image sensor unit 300.

The filter unit 500 is disposed between the image sensor unit 300 and a lens closest to the image sensor unit 300. That is, the filter unit 500 is disposed between the eighth lens 180 and the image sensor unit 300. For example, the filter unit 500 may include an infrared filter or an optical filter.

The filter unit 500 passes light of a set wavelength band. In addition, the filter unit 500 filters light of an unset wavelength band. When the filter unit 500 includes an infrared filter, it is possible to block radiant heat emitted from external light from being transferred to the image sensor unit 300. In addition, the filter unit 500 may transmit visible light and reflect infrared light.

The optical module 2000 may include a light path changing member (not shown).

The light path changing member reflects light incident from the outside. Thereby, the path of the light is changed. The light path changing member may include a reflector or a prism. For example, the light path changing member may include a right-angle prism. Accordingly, the light path changing member may reflect the path of the incident light at an angle of 90°. Thereby, the path of light may be changed.

The light path changing member may be disposed closer to the object side than the plurality of lenses. When the optical module 2000 includes the light path changing member, the light path changing member, the first lens 110, the second lens 120, the third lens 130, the fourth lens 140, the fifth lens 150, the sixth lens 160, the seventh lens 170, the eighth lens 180, the filter unit 500, and the image sensor unit 300 may be sequentially dispose.

The light path changing member changes a path of light incident from the outside in a set direction. For example, the light path changing member may change a path of light incident in a first direction to a second direction in which the plurality of lenses are disposed. The second direction may be an optical axis direction.

If the optical module 2000 includes a light path changing member, the optical module 2000 may be applied to a folded camera. In detail, when the optical module 2000 includes the light path changing member, light incident in a direction perpendicular to the surface of the electronic device to which the optical module 2000 is applied may be changed into a direction parallel to the surface of the electronic device. Accordingly, the optical module 2000 may have a thin thickness. Accordingly, the electronic device may be formed with a small thickness.

The lenses of the optical system 1000 may move forward and backward along the optical axis. In detail, at least one of the lenses may move toward the object side or the sensor side along the optical axis direction. Accordingly, the optical system 1000 and the optical module 2000 may adjust the focal length in the low magnification mode and the high magnification mode.

Referring to FIGS. 1 to 6, the lenses are divided into a plurality of lens groups. In detail, the lenses are divided into a first lens group defined as a fixed group lens that does not move and a second lens group and a third lens group defined as a moving group lens.

The first lens group G1 includes at least one lens. In detail, the first lens group G1 includes a plurality of lenses. In detail, the first lens group G1 includes a plurality of lenses spaced apart from each other at set intervals. For example, the first lens group G1 may include the first lens 110, the second lens 120, and the third lens 130 spaced apart from each other.

An interval between the plurality of lenses of the first lens group G1 is fixed without being changed by the operation change of the first mode to the third mode. For example, the distance between the first lens 110 and the second lens 120 is not changed by the change in operation of the first mode to the third mode. In addition, the distance between the second lens 120 and the third lens 130 is not changed by the change in the operation of the first mode to the third mode.

The interval between the plurality of lenses is defined as the distance between centers of adjacent lenses in the optical axis OA direction.

The second lens group G2 includes at least one lens. In detail, the second lens group G2 includes a plurality of lenses. The number of lenses in the first lens group G1 and the number of lenses in the second lens group G2 may be the same or different. For example, the number of lenses of the second lens group G2 may be smaller than the number of lenses of the first lens group G1.

The second lens group G2 includes a plurality of lenses spaced apart from each other at set intervals. For example, the second lens group G2 may include the fourth lens 140 and the fifth lens 150 spaced apart from each other.

An interval between the plurality of lenses of the second lens group G2 is fixed without being changed by the operation change of the first mode to the third mode. For example, the distance between the fourth lens 140 and the fifth lens 150 is not changed by the change in operation of the first mode to the third mode. The interval between the plurality of lenses is defined as the distance between centers of adjacent lenses in the optical axis OA direction.

The third lens group G3 includes at least one lens. In detail, the third lens group G3 includes a plurality of lenses. The number of lenses in the third lens group G3 and the number of lenses in the second lens group G2 may be the same or different. For example, the number of lenses of the third lens group G3 may be greater than the number of lenses of the second lens group G2.

The third lens group G3 includes a plurality of lenses spaced apart at set intervals. For example, the third lens group G3 may include the sixth lens 160, the seventh lens 170, and the eighth lens 180 spaced apart from each other.

An interval between the plurality of lenses of the third lens group G3 is fixed without being changed by the operation change of the first mode to the third mode. For example, the distance between the sixth lens 160 and the seventh lens 170 is not changed by the change in operation of the first mode to the third mode. In addition, the distance between the seventh lens 170 and the eighth lens 180 is not changed by the change in the operation of the first mode to the third mode. The interval between the plurality of lenses is defined as the distance between centers of adjacent lenses in the optical axis OA direction.

The second lens group G2 and the third lens group G3 move. In detail, the second lens group G2 and the third lens group G3 move along the optical axis direction. The second lens group G2 and the third lens group G3 move closer to the first lens group G1 or the image sensor unit 300 along the optical axis direction. That is, the second lens group G2 and the third lens group G3 move closer to the object side or the sensor side along the optical axis direction.

For example, a driving member (not shown) is connected to the optical system 1000. The second lens group G2 and the third lens group G3 may move along the optical axis direction by the driving force of the driving member.

The driving member may move the second lens group G2 and the third lens group G3 by changing the first mode to the third mode. Accordingly, at least one of a distance between the first lens group G1 and the second lens group G2, a distance between the first lens group G1 and the third lens group G3, a distance between the second lens group G2 and the image sensor unit 300, and a distance between the third lens group G3 and the image sensor unit 300 are changed and controlled.

The magnification of the first mode may mean a magnification of 4.8 times when a field of view of 85° is set to 1 time. In addition, the magnification of the second mode may mean a magnification of 6 times when the field of view of 85° is set to 1 time. Also, the magnification of the third mode may mean a magnification of 8.5 times when the field of view of 85° is set to 1 time.

For example, as shown in FIGS. 1 to 6, the first lens group G1 is fixed. Also, the second lens group G2 and the third lens group G3 may be movable by the driving member. In this case, intervals between the lenses of the first lens group G1, the second lens group G2, and the third lens group G3 may not change.

In detail, when the second lens group G2 and the third lens group G3 move, the distance between the fourth lens 140 and the fifth lens 150 of the second lens group G2, the distance between the sixth lens 160 and the seventh lens 170 of the third lens group G3, and the distance between the seventh lens 170 and the eighth lens 180 of the third lens group G3 may be fixed regardless of the driving force. Accordingly, the total track length (TTL) of the optical module 2000 is maintained. Also, a back focal length (BFL) of the optical module 2000 is changed by the driving force.

For example, the optical module 2000 may change from the first mode to the second mode. Alternatively, the optical module 2000 may change from the first mode to the third mode. Alternatively, the optical module 2000 may change from the second mode to the third mode. At this time, the second lens group G2 and the third lens group G3 may move in the direction of the first lens group G1 from the image sensor unit 300. In detail, the second lens group G2 and the third lens group G3 may move to positions adjacent to the first lens group G1.

Alternatively, the optical module 2000 may change from the third mode to the first mode. Alternatively, the optical module 2000 may change from the third mode to the second mode. Alternatively, the optical module 2000 may change from the second mode to the first mode. At this time, the second lens group G2 and the third lens group G3 may move in the direction of the image sensor unit 300 from the first lens group G1. In detail, the second lens group G2 and the third lens group G3 may move to positions adjacent to the image sensor unit 300.

In addition, when the second lens group G2 and the third lens group G3 are moved, the composite focal length of the first lens 110 and the second lens 120 may be maintained. Also, the composite focal length of the second lens 120 and the third lens 130 may be maintained. Also, the composite focal length of the first lens 110, the second lens 120, and the third lens 130 may be maintained.

In addition, when the second lens group G2 and the third lens group G3 are moved, the composite focal length of the fourth lens 140 and the fifth lens 150 may be maintained.

In addition, when the second lens group G2 and the third lens group G3 are moved, the composite focal distance of the sixth lens 160 and the seventh lens 170 may be maintained. Also, the composite focal length of the seventh lens 170 and the eighth lens 180 may be maintained. In addition, the composite focal length of the sixth lens 160, the seventh lens 170, and the eighth lens 180 may be maintained.

Also, when the second lens group G2 and the third lens group G3 move, the focal lengths of the third lens 130 and the fourth lens 140 may change. In addition, the focal lengths of the second lens 120, the third lens 130, and the fourth lens 140 may change. In addition, the focal lengths of the third lens 130, the fourth lens 140, and the fifth lens 150 may change. Also, the focal lengths of the first lens 110, the second lens 120, the third lens 130, and the fourth lens 140 may change. Also, the focal lengths of the second lens 120, the third lens 130, the fourth lens 140, and the fifth lens 150 may change.

Also, when the second lens group G2 and the third lens group G3 move, the focal lengths of the fifth lens 150 and the sixth lens 160 may change. In addition, the focal lengths of the fourth lens 140, the fifth lens 150, and the sixth lens 160 may change. Also, the focal lengths of the fifth lens 150, the sixth lens 160, and the seventh lens 170 may change. Also, the focal lengths of the third lens 130, the fourth lens 140, the fifth lens 150, and the sixth lens 160 may change. Also, the focal lengths of the fourth lens 140, the fifth lens 150, the sixth lens 160, and the seventh lens 170 may change.

That is, in the camera module including the optical module according to the embodiment, the position of at least one lens group among the plurality of lens groups G1, G2, and G3 is controlled. Accordingly, the distance between the lens groups G1, G2, and G3, the effective focal length (EFL) of the optical system 1000, and the composite focal length of the plurality of lenses may be changed. Accordingly, the camera module may control the effective focal length (EFL). In addition, the camera module may provide a zoom function for a subject at low magnification, medium magnification, and high magnification.

In the optical system, the effective focal length (EFL) of the optical system is changed by the movement of the second lens group G2 and the third lens group G3.

For example, the effective focal length of the first mode may be 13 mm to 14 mm. Also, the effective focal length of the second mode may be 20 mm to 21 mm. Also, the effective focal length of the third mode may be 28 mm to 29 mm.

That is, the effective focal length (EFL) of the optical system may vary from 13 mm to 29 mm.

The first lens group G1, the second lens group G2, and the third lens group G3 have different refractive powers. For example, the first lens group G1 may have negative (-) refractive power. Also, the second lens group G2 may have positive (+) refractive power. Also, the third lens group G3 may have negative (-) refractive power.

The first lens group G1, the second lens group G2, and the third lens group G3 have different focal lengths. For example, the first lens group G1 and the second lens group G2 have refractive powers of opposite signs. Accordingly, the focal length of the second lens group G2 and the focal length of the first lens group G1 have opposite signs. In addition, the second lens group G2 and the third lens group G3 have refractive powers of opposite signs. Accordingly, the focal length of the second lens group G2 and the focal length of the third lens group G3 have opposite signs. In addition, the first lens group G1 and the third lens group G3 have refractive powers of the same sign. Accordingly, the focal length of the first lens group G1 and the focal length of the third lens group G3 have the same sign.

Hereinafter, lenses included in the first lens group G1, the second lens group G2, and the third lens group G3 will be described.

The first lens 110 may have positive (+) refractive power at the optical axis. The first lens 110 may include a plastic or glass material. For example, the first lens 110 may include a plastic material.

The first lens 110 includes a first surface S1 defined as an object-side surface and a second surface S2 defined as a sensor-side surface. The first surface S1 is convex with respect to the object-side surface at the optical axis. Also, the second surface S2 may be concave with respect to the sensor-side surface at the optical axis. That is, the first lens 110 as a whole may have a meniscus shape convex from the optical axis toward the object side.

At least one of the first surface S1 and the second surface S2 may be an aspheric surface. For example, both the first surface S1 and the second surface S2 may be aspheric surfaces.

A size of the clear aperture of the first surface S1 and a size of the clear aperture of the second surface S2 may be different. For example, the size of the clear aperture of the first surface S1 may be greater than the size of the clear aperture of the second surface S2.

The second lens 120 may have positive (+) refractive power at the optical axis. The second lens 120 may include a plastic or glass material. For example, the second lens 120 may include a plastic material.

The second lens 120 includes a third surface S3 defined as an object-side surface and a fourth surface S4 defined as a sensor-side surface. The third surface S3 may be convex with respect to the object-side surface at the optical axis. Also, the fourth surface S4 may be convex with respect to the sensor-side surface at the optical axis. That is, the second lens 120 as a whole may have a meniscus shape convex from the optical axis toward the object side.

At least one of the third surface S3 and fourth surface S4 may be an aspheric surface. For example, both the third surface S3 and the fourth surface S4 may be aspheric surfaces.

A size of the clear aperture of the third surface S3 and a size of the clear aperture of the fourth surface S4 may be different. For example, the size of the clear aperture of the third surface S3 may be greater than the size of the clear aperture of the fourth surface S4.

The third lens 130 may have negative (-) refractive power at the optical axis. The third lens 130 includes a glass material.

The third lens 130 includes a fifth surface S5 defined as an object-side surface and a sixth surface S6 defined as a sensor-side surface. The fifth surface S5 may be concave with respect to the object-side surface at the optical axis. In addition, the sixth surface S6 may be concave with respect to the sensor-side surface at the optical axis. That is, the third lens 130 may have a concave shape on both sides at the optical axis as a whole.

At least one of the fifth surface S5 and the sixth surface S6 may be an aspheric surface. For example, both the fifth surface S5 and the sixth surface S6 may be aspheric surfaces.

A size of the clear aperture of the fifth surface S5 and a size of the clear aperture of the sixth surface S6 may be different. For example, the size of the clear aperture of the fifth surface S5 may be greater than the size of the clear aperture of the sixth surface S6.

The fourth lens 140 may have positive (+) refractive power at the optical axis. The fourth lens 140 includes a glass material.

The fourth lens 140 includes a seventh surface S7 defined as an object-side surface and an eighth surface S8 defined as a sensor-side surface. The seventh surface S7 may be convex with respect to the object-side surface at the optical axis. Also, the eighth surface S8 may be convex with respect to the sensor-side surface at the optical axis. That is, the fourth lens 140 may have a shape in which both sides are convex at the optical axis as a whole.

At least one of the seventh surface S7 and the eighth surface S8 may be an aspheric surface. For example, both the seventh surface S7 and the eighth surface S8 may be aspheric surfaces.

A size of the clear aperture of the seventh surface S7 may be different from A size of the clear aperture of the eighth surface S8. For example, the size of the clear aperture of the seventh surface S7 may be greater than the size of the clear aperture of the eighth surface S8.

The fifth lens 150 may have negative (-) refractive power at the optical axis. The fifth lens 150 may include a plastic or glass material. For example, the fifth lens 150 may include a plastic material.

The fifth lens 150 includes a ninth surface S9 defined as an object-side surface and a tenth surface S10 defined as a sensor-side surface. The ninth surface S9 may be convex with respect to the object-side surface at the optical axis. In addition, the tenth surface S10 may be concave with respect to the sensor-side surface at the optical axis. That is, the fifth lens 150 may have a meniscus shape convex from the optical axis toward the object as a whole.

At least one of the ninth surface S9 and the tenth surface S10 may be an aspheric surface. For example, both the ninth surface S9 and the tenth surface S10 may be aspheric surfaces.

A size of the clear aperture of the ninth surface S9 and a size of the clear aperture of the tenth surface S10 may be different. For example, the size of the clear aperture of the ninth surface S9 may be greater than the size of the clear aperture of the tenth surface S10.

The sixth lens 160 may have positive (+) refractive power at the optical axis. The sixth lens 160 may include a plastic or glass material. For example, the sixth lens 160 may include a plastic material.

The sixth lens 160 includes an eleventh surface S11 defined as an object-side surface and a twelfth surface S12 defined as a sensor-side surface. The eleventh surface S11 may be concave with respect to the object-side surface at the optical axis. Also, the twelfth surface S12 may be convex with respect to the sensor-side surface at the optical axis. That is, the sixth lens 160 may have a meniscus shape convex from the optical axis toward the sensor as a whole.

At least one of the eleventh surface S11 and the twelfth surface S12 may be an aspheric surface. For example, both the eleventh surface S11 and the twelfth surface S12 may be aspheric surfaces.

A size of the clear aperture of the eleventh surface S11 and a size of the clear aperture of the twelfth surface S12 may be different. For example, the size of the clear aperture of the eleventh surface S11 may be smaller than the size of the clear aperture of the twelfth surface S12.

The seventh lens 170 may have negative (-) refractive power at the optical axis. The seventh lens 170 may include a plastic or glass material. For example, the seventh lens 170 may include a plastic material.

The seventh lens 170 includes a thirteenth surface S13 defined as an object-side surface and a fourteenth surface S14 defined as a sensor-side surface. The thirteenth surface S13 may be concave with respect to the object-side surface at the optical axis. Also, the fourteenth surface S14 may be convex with respect to the sensor-side surface at the optical axis. That is, the seventh lens 170 may have a meniscus shape convex from the optical axis toward the sensor as a whole.

At least one of the thirteenth surface S13 and the fourteenth surface S14 may be an aspheric surface. For example, both the thirteenth surface S13 and the fourteenth surface S14 may be aspherical surfaces.

A size of the clear aperture of the thirteenth surface S13 and a size of the clear aperture of the fourteenth surface S14 may be different. For example, the size of the clear aperture of the thirteenth surface S13 may be greater than the size of the clear aperture of the fourteenth surface S14.

The eighth lens 180 may have positive (+) refractive power at the optical axis. The eighth lens 180 may include a plastic or glass material. For example, the eighth lens 180 may include a plastic material.

The eighth lens 180 includes a fifteenth surface S15 defined as an object-side surface and a sixteenth surface S16 defined as a sensor-side surface. The fifteenth surface S15 may be concave with respect to the object-side surface at the optical axis. Also, the sixteenth surface S16 is convex with respect to the sensor-side surface at the optical axis. That is, the eighth lens 180 may have a meniscus shape convex from the optical axis toward the sensor as a whole.

At least one of the fifteenth surface S15 and the sixteenth surface S16 may be an aspheric surface. For example, both the fifteenth surface S15 and the sixteenth surface S16 may be aspheric surfaces.

A size of the clear aperture of the fifteenth surface S15 and a size of the clear aperture of the sixteenth surface S16 may be different. For example, the size of the clear aperture of the fifteenth surface S15 may be smaller than the size of the clear aperture of the sixteenth surface S16.

At least one lens among the plurality of lenses may have a non-circular shape. For example, at least one of the lenses of the first lens group G1 may have a non-circular shape. Alternatively, at least one of the lenses of the second lens group G2 may have a non-circular shape. Alternatively, at least one of the lenses of the third lens group G3 may have a non-circular shape.

For example, the first lens 110 may have a non-circular shape. In detail, the first surface S1 and the second surface S2 may have a non-circular shape. That is, when each of the first surface S1 and the second surface S2 is viewed from the front corresponding to the optical axis OA, the effective region of each lens surface may have a non-circular shape.

Also, the eighth lens 180 may have a non-circular shape. In detail, the fifteenth surface S15 and the sixteenth surface S16 may have a non-circular shape. That is, when each of the fifteenth surface S15 and the sixteenth surface S16 is viewed from the front corresponding to the optical axis OA, the effective region of each lens surface may have a non-circular shape.

Also, the second lens 120 may have a circular or non-circular shape. That is, the third surface S3 and the fourth surface S4 may have circular or non-circular shapes. That is, when each of the third surface S3 and fourth surface S4 is viewed from the front corresponding to the optical axis OA, the effective region of each lens surface may have a circular or non-circular shape.

Also, the third lens 130 may have a circular shape. That is, the fifth surface S5 and the sixth surface S6 may have a circular shape. That is, when each of the fifth surface S5 and the sixth surface S6 is viewed from the front corresponding to the optical axis OA, the effective region of each lens surface may have a circular shape.

Also, the fourth lens 140 and the fifth lens 150 may have circular or non-circular shapes. That is, the seventh surface S7, the eighth surface S8, the ninth surface S9, and the tenth surface S10 may have circular or non-circular shapes. That is, when each of the 7th surface S7, eighth surface S8, ninth surface S9 and tenth surface S10 is viewed from the front corresponding to the optical axis OA, the effective region of each lens surface may have a circular or non-circular shape.

Also, the sixth lens 160 and the seventh lens 170 may have circular or non-circular shapes. That is, the eleventh surface S11, the twelfth surface S12, the thirteenth surface S13, and the fourteenth surface S14 may have a circular or non-circular shape. That is, when each of the eleventh surface S11, twelfth surface S12, thirteenth surface S13, and fourteenth surface S14 is viewed from the front corresponding to the optical axis OA, the effective region of each lens surface may have a circular or non-circular shape.

FIG. 7 is a view for explaining a lens having a non-circular shape. In FIG. 7, the first lens 110 is mainly described for convenience of description.

Referring to FIG. 7, each effective region of the first surface S1 and the second surface S2 includes first to fourth edges A1, A2, A3, and A4.

The first edge A1 and the second edge A2 face each other in a first direction (x-axis direction) perpendicular to the optical axis OA. The first edge A1 and the second edge A2 may have a curved shape. The first edge A1 and the second edge A2 may have a curved shape having the same length or the same curvature. That is, the first edge A1 and the second edge A2 may be symmetric based on an imaginary line passing through the optical axis OA and extending in the second direction (y-axis direction). The second direction (y-axis direction) is perpendicular to the optical axis OA and the first direction.

In addition, the third edge A3 and the fourth edge A4 face each other in the second direction (y-axis direction). The third edge A3 and the fourth edge A4 connect the ends of the first edge A1 and the second edge A2. The third edge A3 and the fourth edge A4 may have a straight-line shape. The third edge A3 and the fourth edge A4 may have the same length and be parallel to each other. That is, the third edge A3 and the fourth edge A4 may be symmetric based on an imaginary line passing through the optical axis OA and extending in the first direction (x-axis direction).

The first surface S1 and the second surface S2 include the first to fourth edges A1, A2, A3, and A4. Accordingly, the first surface S1 and the second surface S2 may have a non-circular shape (eg, a D-cut shape)..

The first surface S1 and the second surface S2 may have the non-circular shape in the process of manufacturing the first lens 110. For example, if the first lens 110 includes a plastic or glass material, the first lens 110 may be manufactured in the non-circular shape during an injection process.

Alternatively, the first lens 110 may be manufactured in a circular shape by the injection process. In a subsequent cutting process, portions of the first surface S1 and second surface S2 may be cut. Accordingly, the first lens 110 may have the third edge A3 and the fourth edge A4.

Accordingly, each effective region of the first surface S1 and the second surface S2 may have a set size. For example, a length CA of an imaginary first straight line passing through the optical axis OA and connecting the first edge A1 and the second edge A2 may be defined. Also, a length CH of an imaginary second straight line passing through the optical axis OA and connecting the third edge A3 and the fourth edge A4 may be defined.

The length CA of the imaginary first straight line may be longer than the length CH of the imaginary second straight line. The length CA of the first straight line means the size of the maximum clear aperture of each of the first and second surfaces S1 and S2. In addition, the length CH of the second straight line means the size of the minimum clear aperture of each of the first surface S1 and the second surface S2.

The sizes of the minimum clear aperture of the first lens group G1, the second lens group G2, and the third lens group G3 may be different from each other. In detail, the size of the minimum clear aperture of the first lens group G1 may be larger than the sizes of the minimum clear aperture of the second lens group G2 and the third lens group G3.

For example, the size of the minimum clear aperture of the first lens group G1 may be about 5.0 mm to about 5.4 mm. Also, the size of the minimum clear aperture of the second lens group G2 and the third lens group G3 may be about 4.0 mm to about 4.4 mm.

The optical system 1000 and the optical module 2000 according to the embodiment may satisfy at least one of the following equations. Accordingly, the optical system 1000 and the optical module 2000 according to the embodiment may improve aberration characteristics. Therefore, it has improved optical properties. In addition, the embodiment may effectively provide a zoom function for a desired magnification. In addition, it may have a slim and compact size.

[Equation 1]

$$0.65 < CA_L4S1 / CA_L1S1 < 0.95$$

(The CA_L4S1 is the maximum clear aperture of the object-side surface of the fourth lens. The CA_L1S1 is the maximum clear aperture of the object-side surface of the first lens.)

Equation 1 is related to the D-cut ratio of the second lens group. When the optical system according to the embodiment satisfies Equation 1, the D-cut ratio of the fourth lens may be reduced.

[Equation 2]

$$20 < V4 - V5 < 80$$

(V4 is the Abbe's number of the fourth lens. V5 is the Abbe's number of the fifth lens.)

Equation 2 is related to the chromatic aberration of the optical system. When the optical system according to the embodiment satisfies Equation 2, chromatic aberration may be reduced.

[Equation 3]

$$20 < V6 - V8 < 80$$

(The V6 is the Abbe's number of the sixth lens. The V8 is the Abbe's number of the eighth lens.)

Equation 3 is related to the chromatic aberration of the optical system. When the optical system according to the embodiment satisfies Equation 3, chromatic aberration may be reduced.

[Equation 4]

$$-25 < f123 < -5$$

(The f123 is the composite focal length of the first lens, the second lens, and the third lens.)

Equation 4 is related to the size of the optical system and the peripheral light ratio (RI) of the optical system. When the optical system according to the embodiment satisfies Equation 4, the peripheral light amount ratio of the optical system may be reduced. Also, the diameters of the lenses may be reduced. Accordingly, the optical system may have a compact size.

[Equation 5]

$$2 < BFL1_1$$

(The BFL_1 is the distance in the optical axis direction from the apex of the sensor-side surface of the last lens to the top surface of the image sensor unit when the second lens group and the third lens group move at the maximum moving distance in the first mode.)

Equation 5 is related to the size of the internal space of the optical system. When the optical system according to the embodiment satisfies Equation 5, space for circuits and instrument structures may be secured. Preferably, Equation 5 may satisfy 1 < BFL1_1 < 5.

[Equation 6]

$$-7 < f3 < 0$$

(The f3 is the focal length of the third lens.)

Equation 6 is related to the power of the first lens group and the entrance pupil size of the second lens group. If the optical system according to the embodiment satisfies Equation 6, the first lens group may have negative (-) refractive power within a set range. In addition, the entrance pupil diameter of the lenses of the second lens group may be satisfied within the set range.

[Equation 7]

$$0 < f4 < 7$$

(The f4 is the focal length of the fourth lens.)

Equation 7 is related to the lens diameter of the second lens group. When the optical system according to the embodiment satisfies Equation 7, the diameter of the fourth lens may be minimized.

[Equation 8]

$$-25 < f5 < 0$$

(The f5 is the focal length of the fifth lens.)

Equation 8 is related to the chromatic aberration of the second lens group of the optical system. When the optical system according to the embodiment satisfies Equation 8, chromatic aberration of the second lens group may be reduced. Accordingly, it is possible to minimize a change in chromatic aberration in the first mode to the third mode.

[Equation 9]

$$3 < TTL / ImgH < 5$$

(The total track length (TTL) is a distance at the optical axis OA from an object-side surface of the first lens 110 to an upper surface of the image sensor unit 300. The upper surface center of the image sensor unit 300 may be defined as the 0 field region. The ImgH means twice the vertical distance of the optical axis OA from the 0 field region to the 1.0 field region. That is, the ImgH means the diagonal length the effective region of the image sensor unit 300.)

Equation 9 is related to the size of the optical system. When the optical system according to the embodiment satisfies Equation 9, the distance between the first lens and the image sensor unit may be controlled within a set range. Thus, the optical system may have a compact size.

[Equation 10]

$$2 < md1 < 7;$$

$$2 < md2 < 7;$$

$$md1 < md2$$

(The md1 is the moving distance of the second lens group when changing from the first mode to the third mode or from the third mode to the first mode. The md2 is the moving distance of the third lens group when changing from the first mode to the third mode or from the third mode to the first mode.)

Equation 10 is related to the size of the optical system. When the optical system according to the embodiment satisfies Equation 10, the moving distances of the second lens group and the third lens group may be controlled within a set range. Thus, the optical system may have a compact size.

[Equation 11]

$$0.2 < BFL1_1 / BFL1_2 < 0.5$$

(The BFL_1 is the distance in the optical axis direction from the apex of the sensor-side surface of the last lens to the top surface of the image sensor unit when the second lens group and the third lens group move at the maximum moving distance in the first mode. The BFL_2 is the distance in the optical axis direction from the apex of the sensor-side surface of the last lens to the top surface of the image sensor unit when the second lens group and the third lens group move at the maximum moving distance in the third mode.)

Equation 11 is related to the size of the optical system. When the optical system according to the embodiment satisfies Equation 11, the size of the BFL according to the moving distances of the second lens group and the third lens group may be controlled within a set range. Thus, the optical system may have a compact size.

[Equation 12]

$$2.0 < EFL_2 / EFL_1 < 2.5$$

(The EFL_1 is the effective focal length in the first mode. The EFL_2 is the effective focal length in the second mode.)

Equation 12 is related to the magnification of the optical system. When the optical system according to the embodiment satisfies Equation 12, images of low magnification or high magnification may be realized by the moving distances of the second lens group and the third lens group.

[Equation 13]

$$4.5 < F_2$$

$$1.3 < F_2 / F_1 < 1.9$$

(The F_1 is the F-number in the first mode. The F_2 is the F-number in the third mode.)

Equation 13 is related to the resolution of the optical system. When the optical system according to the embodiment satisfies Equation 13, resolution within the range set in the first mode and the third mode may be implemented.

[Equation 14]

$$N3 > N1, N2, N4, N5, N6, N7, N8$$

(N1 is the refractive index of the first lens. N2 is the refractive index of the second lens. N3 is the refractive index of the third lens. N4 is the refractive index of the fourth lens. N5 is the refractive index of the fifth lens. N6 is the refractive index of the sixth lens. N7 is the refractive index of the seventh lens. N8 is the refractive index of the eighth lens.)

Equation 14 is related to chromatic aberration and distortion aberration of the optical system. When the optical system according to the embodiment satisfies Equation 14, chromatic aberration and distortion aberration may be reduced in the first mode to the third mode.

[Equation 15]

$$1.05 < N3 / N4 < 1.35$$

(N3 is the refractive index of the third lens. N4 is the refractive index of the fourth lens.)

Equation 15 is related to chromatic aberration and distortion aberration of the optical system. When the optical system according to the embodiment satisfies Equation 15, chromatic aberration and distortion aberration may be reduced in the first mode to the third mode.

[Equation 16]

$$V4 - V5 > V8 - V6;$$

$$V4 - V5 > V3 - V1$$

(V1 is the Abbe's number of the first lens. V3 is the Abbe's number of the third lens. V4 is the Abbe's number of the fourth lens. V5 is the Abbe's number of the fifth lens. V6 is the Abbe's number of the sixth lens. V8 is the Abbe's number of the eighth lens.)

Equation 16 is related to the chromatic aberration of the optical system. When the optical system according to the embodiment satisfies Equation 16, chromatic aberration may be reduced in the first mode to the third mode.

[Equation 17]

$$1 < CAL3S1 / CAL3S2 < 1.3$$

(CAL3S1 is the maximum clear aperture of the object-side surface of the third lens. CAL3S2 is the maximum clear aperture of the sensor-side surface of the third lens.)

Equation 17 is related to the D-cut ratio of the first lens group. When the optical system according to the embodiment satisfies Equation 17, the D-cutof the third lens may be omitted.

[Equation 18]

$$1.5 < CT1 / CG12 < 2.5$$

(The CT3 is the thickness of the third lens at the optical axis. The CG12 is the distance between the first lens and the second lens at the optical axis.)

Equation 18 is related to the optical performance of the optical system. When the optical system according to the embodiment satisfies Equation 18, the optical performance of the optical system can be maintained.

[Equation 19]

$$13 < CT4 / CG45 < 18$$

(The CT4 is the thickness of the fourth lens at the optical axis. The CG45 is the distance between the fourth lens and the fifth lens at the optical axis.)

Equation 19 is related to the optical performance of the optical system. When the optical system according to the embodiment satisfies Equation 19, the optical performance of the optical system may be maintained.

[Equation 20]

$$0.75 < CT8 / CG78 < 0.95$$

(The CT8 is the thickness of the eighth lens at the optical axis. The CG78 is the distance between the seventh lens and eighth lens at the optical axis.)

Equation 20 is related to the optical performance of the optical system. When the optical system according to the embodiment satisfies Equation 20, the optical performance of the optical system may be maintained.

[Equation 21]

$$4.5 < D123 < 4.9$$

(D123 is the distance from the apex of the object-side surface of the first lens to the apex of the sensor-side surface of the third lens in the optical axis direction.)

Equation 21 is related to the size of the optical system. When the optical system according to the embodiment satisfies Equation 21, the optical system may have a compact size.

[Equation 22]

$$3.0 < D45 < 3.6$$

(D45 is the distance from the apex of the object-side surface of the fourth lens to the apex of the sensor-side surface of the fifth lens in the optical axis direction.)

Equation 22 is related to the size of the optical system. When the optical system according to the embodiment satisfies Equation 22, the optical system may have a compact size.

[Equation 23]

$$4.0 < D678 < 4.5$$

(D678 is the distance from the apex of the object-side surface of the sixth lens to the apex of the sensor-side surface of the eighth lens in the optical axis direction.)

Equation 23 is related to the size of the optical system. When the optical system according to the embodiment satisfies Equation 23, the optical system may have a compact size.

[Equation 24]

$$1.0 < CAL1S1 / CHL1S1 < 1.5$$

(CAL1S1 is the maximum clear aperture of the object-side surface of the first lens. CHL1S1 is the minimum clear aperture of the object-side surface of the first lens.)

Equation 24 is related to the D-cut ratio of the first lens group. When the optical system according to the embodiment satisfies Equation 24, the D-cut ratio of the first lens may be reduced.

[Equation 25]

$$1.0 < CAL2S1 / CHL2S1 < 1.2$$

(The CAL2S1 is the maximum clear aperture of the object-side surface of the second lens. The CHL2S1 is the minimum clear aperture of the object-side surface of the second lens.)

Equation 25 is related to the D-cut ratio of the second lens group. When the optical system according to the embodiment satisfies Equation 25, the D-cut ratio of the third lens may be reduced.

[Equation 26]

$$1.0 < CAL4S1 / CHL4S1 < 1.3$$

(CAL4S1 is the maximum clear aperture of the object-side surface of the fourth lens. CHL4S1 is the minimum clear aperture of the object-side surface of the fourth lens.)

Equation 26 is related to the D-cut ratio of the second lens group. When the optical system according to the embodiment satisfies Equation 26, the D-cut ratio of the fourth lens may be reduced.

[Equation 27]

$$1.0 < CAL5S1 / CHL5S1 < 1.2$$

(CAL5S1 is the maximum clear aperture of the object-side surface of the fifth lens. CHL5S1 is the minimum clear aperture of the object-side surface of the fifth lens.)

Equation 27 is related to the D-cut ratio of the second lens group. When the optical system according to the embodiment satisfies Equation 27, the D-cut ratio of the fifth lens may be reduced.

[Equation 28]

$$1.0 < CAL8S1 / CHL8S1 < 1.3$$

(CAL8S1 is the maximum clear aperture of the object-side surface of the eighth lens. CHL8S1 is the minimum clear aperture of the object-side surface of the eighth lens.)

Equation 28 is related to the D-cut ratio of the third lens group. When the optical system according to the embodiment satisfies Equation 28, the D-cut ratio of the eighth lens may be reduced.

[Equation 29]

$$CAL4S1 > CAL4S2;$$

$$CAL5S1 > CAL5S2;$$

$$CAL7S1 > CAL8S2;$$

$$CAL8S2 > CAL8S1$$

(CAL4S1 is the maximum clear aperture of the object-side surface of the fourth lens. CAL4S2 is the maximum clear aperture of the sensor-side surface of the fourth lens. CAL451 is the maximum clear aperture of the object-side surface of the fifth lens. CAL5S2 is the maximum clear aperture of the sensor-side surface of the fifth lens. CAL7S1 is the maximum clear aperture of the object-side surface of the seventh lens. CAL7S2 is the maximum clear aperture of the sensor-side surface of the seventh lens. CAL8S1 is the maximum clear aperture of the object-side surface of the eighth lens. CAL8S2 is the maximum clear aperture of the sensor-side surface of the eighth lens.)

Equation 29 is related to the D-cut ratio of the third lens group. When the optical system according to the embodiment satisfies Equation 29, the D-cut ratio of the eighth lens may be reduced.

[Equation 30]

$$1 < |f1/ f3| < 5$$

(The f1 is the focal length of the first lens. The f3 is the focal length of the third lens.)

Equation 30 is related to the resolution of the optical system. When the optical system according to the embodiment satisfies Equation 30, the resolution of the first lens and the third lens may be controlled. Accordingly, the resolution of the optical system may be improved.

[Equation 31]

$$1 < |f5/ f4| < 5$$

(The f4 is the focal length of the fourth lens. The f5 is the focal length of the fifth lens.)

Equation 31 is related to the resolution of the optical system. When the optical system according to the embodiment satisfies Equation 31, the resolution of the fourth lens and the fifth lens may be controlled. Accordingly, the resolution of the optical system may be improved.

[Equation 32]

$$1 < |f5/ f4| / |f1/ f3| < 1.3$$

Equation 32 is related to the resolution of the optical system. When the optical system according to the embodiment satisfies Equation 32, the resolution of the first lens, the third lens, the fourth lens, and the fifth lens may be controlled. Accordingly, the resolution of the optical system may be improved.

[Equation 33]

$$0 < f45 < 10,$$

$$-15 < f678 < -5$$

(The f45 is the composite focal length of the fourth lens and the fifth lens. The f678 is the composite focal length of the sixth lens, the seventh lens, and the eighth lens.)

Equation 33 is related to the magnification of the optical system. When the optical system according to the embodiment satisfies Equation 33, the composite focal lengths of the second lens group and the third lens group may be controlled. Accordingly, it is possible to have an improved resolution at a desired magnification.

[Equation 34]

$$2.5 < |f123 / f45| < 5.5;$$

$$0.5 < |f123 / f678| < 2.5$$

$$1.5 < |f678 / f45| < 2.5$$

Equation 34 is related to the magnification of the optical system. When the optical system according to the embodiment satisfies Equation 34, the composite focal lengths of the second lens group and the third lens group may be controlled. Accordingly, it is possible to have an improved resolution at a desired magnification.

[Equation 35]

$$0 < |Max_distoriton| < 5$$

(The Max_distoriton is the maximum distortion of the optical system.)

[Equation 36]

$$4.5 < ImgH < 7$$

[Equation 37]

$$20° < FOV(\theta)_1 \leq 30°;$$

$$8° < FOV(\theta)_2 \leq 16°;$$

(The FOV(θ)_1 is an effective field of view of the optical system in the first mode. The FOV(θ)_2 is an effective field of view of the optical system in the second mode.)

[Equation 38]

$$1.0 < EG34_1 / CG34_1 < 1.3$$

$$2.0 < EG34_2 / CG34_2 < 2.8$$

(CG34_1 is a distance between the third lens and the fourth lens at the optical axis in the first mode. The EG34_1 is a distance in the optical axis direction between the end of the effective region of the third lens and the end of effective region of the fourth lens in the first mode. CG34_2 is a distance between the third lens and the fourth lens at the optical axis in the second mode. The EG34_2 is a distance in the optical axis direction between the end of the effective region of the third lens and the end of effective region of the fourth lens in the second mode.)

Equation 38 is related to the resolution of the optical system. When the optical system according to the embodiment satisfies Equation 38, the thickness and the distance of the lens of the first lens group and the second lens group may be controlled. Accordingly, the optical system may have improved resolution.

[Equation 39]

$$1.0 < CG56_1 / EG56_1 < 1.4$$

$$1.1 < CG56_2 / EG56_2 < 1.5$$

(CG56_1 is a distance between the fifth lens and the sixth lens at the optical axis in the first mode. The EG56_1 is a distance in the optical axis direction between the end of the effective region of the fifth lens and the end of effective region of the sixth lens in the first mode. CG56_2 is a distance between the fifth lens and the sixth lens at the optical axis in the second mode. The EG56_2 is a distance in the optical axis direction between the end of the effective region of the fifth lens and the end of effective region of the sixth lens in the second mode.)

Equation 39 is related to the resolution of the optical system. When the optical system according to the embodiment satisfies Equation 39, the thickness and the distance of the lens of the second lens group and the third lens group may be controlled. Accordingly, the optical system may have improved resolution.

[Equation 40]

$$3 < TTL/imgH < 5$$

Equation 40 is related to the size of the optical system. When the optical system according to the embodiment satisfies Equation 40, the optical system may have a compact size.

[Equation 41]

$$0.40 < F_1 / EPD_1 < 75$$

$$0.60 < F_2 / EPD_2 < 0.80$$

$$F_1 / EPD_1 < F_2 / EPD_2$$

(The F_1 is the F-number in the first mode. The F_2 is the F-number in the third mode. The EPD_1 is the entrance pupil in the first mode. The EPD_2 is the entrance pupil in the third mode.)

Equation 41 is related to the resolution of the optical system. When the optical system according to the embodiment satisfies Equation 41, it may have improved resolution in the first mode to the third mode.

[Equation 42]

$$1 < |P3 / P4| < 1.3;$$

(P3 is the refractive power of the third lens. P4 is the refractive power of the fourth lens.)

Equation 42 is related to the distortion aberration of the optical system. When the optical system according to the embodiment satisfies Equation 42, distortion aberration of the optical system may be reduced.)

[Equation 43]

$$0 < CT_Lx / ET_Ly < 3$$

$$0 < ET_Lx / CT_Ly < 3$$

(The CT_Lx is the thickness of the xth lens at the optical axis. The ET_Ly The ET_Ly is the thickness at the end of the effective region of the y-th lens. x is a natural number of $1 \le x \le 8$. y is a natural number of $1 \le y \le 8$. x and y are satisfy x=y.)

Equation 43 is related to the manufacture of the optical system. When the optical system according to the embodiment satisfies Equation 43, the injection characteristics of the lens may be improved. Accordingly, the manufacturing process of lens may be facilitated.

[Equation 44]

$$0 < CH_G1 - CH_G2 < 1;$$

$$0 < CH_G1 - CH_G3 < 1$$

(The CH_G1 is the minimum clear aperture of the lenses of the first lens group. The CH_G2 is the minimum clear aperture of the lenses of the second lens group. The CH_G3 is the minimum clear aperture of the lenses of the third lens group.)

Equation 44 is related to the size of the optical system. When the optical system according to the embodiment satisfies Equation 44, the optical system may have a compact size. Preferably, Equation 44 above may satisfy $0.4 < CH_G1 - CH_G2 < 0.6$ and $0.4 < CH_G1 - CH_G3 < 0.6$.

[Equation 45]

$$0.5 < |md2 - md1| < 0.8$$

Equation 45 is related to the size of the optical system. When the optical system according to the embodiment satisfies Equation 45, the moving distances of the second lens group and the third lens group may be controlled within a set range. Accordingly, the optical system may have a compact size.

[Equation 46]

$$100 < V4 + V5 < 130;$$

$$V4 \text{ or } V6 > 80$$

(V4 is the Abbe's number of the fourth lens. V5 is the Abbe's number of the fifth lens.)

Equation 46 is related to the chromatic aberration of the optical system. When the optical system according to the embodiment satisfies Equation 46, chromatic aberration may be reduced by a difference in Abbe's number between the fourth lens and the fifth lens.

[Equation 47]

$$|R1|, |R2|, |R3|, |R4|, |R5|, |R6|, |R7|, |R8|, |R10|, |R11|, |R12|, |R13|, |R14|, |R15|, |R16| < |R9|,$$

$$100 < |R9| / |R10| < 140$$

(R1 is the radius of curvature of the object-side surface of the first lens. R2 is the radius of curvature of the sensor-side surface of the first lens. R3 is the radius of curvature of the object-side surface of the second lens. R4 is the radius of curvature of the sensor-side surface of the second lens. R5 is the radius of curvature of the object-side surface of the third lens. R6 is the radius of curvature of the sensor-side surface of the third lens. R7 is the radius of curvature of the object-side surface of the fourth lens. R8 is the radius of curvature of the sensor-side surface of the fourth lens. R9 is the radius of curvature of the object-side surface of the fifth lens. R10 is the radius of curvature of the sensor-side surface of the fifth lens. R11 is the radius of curvature of the object-side surface of the sixth lens. R12 is the radius of curvature of the sensor-side surface of the sixth lens. R13 is the radius of curvature of the object-side surface of the seventh lens. R14 is the radius of curvature of the sensor-side surface of the seventh lens. R15 is the radius of curvature of the object-side surface of the eighth lens. R16 is the radius of curvature of the sensor-side surface of the eighth lens.)

Equation 47 is related to the optical performance of the optical system. When the optical system according to the embodiment satisfies Equation 47, the optical performance of the optical system may be maintained.

[Equation 48]

$$1 < TD_G1/TD_G2 < 2$$

(The TD_G1 is the length of the first lens group. The TD_G2 is the length of the second lens group.)

Equation 48 is related to the size of the optical system. When the optical system according to the embodiment satisfies Equation 48, the optical system may have a compact size.

[Equation 49]

$$0.8 < TD_G3/TD_G2 < 1.5$$

(The TD_G2 is the length of the second lens group. The TD_G3 is the length of the third lens group.)

Equation 49 is related to the size of the optical system. When the optical system according to the embodiment satisfies Equation 49, the optical system may have a compact size.

[Equation 50]

$$40 < Ave_ABV < 50$$

(The Ave_ABV is the average of the Abbe's numbers of the first to eighth lenses.)

Equation 50 is related to the chromatic aberration of the optical system. When the optical system according to the embodiment satisfies Equation 50, chromatic aberration may be reduced.

[Equation 51]

$$1.5 < Ave_Ind < 1.8$$

(The Ave_Ind is the average of the refractive indices of the first to eighth lenses.)

Equation 51 is related to the chromatic aberration of the optical system. When the optical system according to the embodiment satisfies Equation 5, chromatic aberration may be reduced.

[Equation 52]

$$1.5 < ET_L3/CT_L3 < 2.5$$

(The ET_L3 is the thickness at the end of the effective region of the third lens. The CT_L3 is the thickness of the third lens at the optical axis.)

Equation 52 is related to the aberration of the optical system. When the optical system according to the embodiment satisfies Equation 52, the aberration characteristics may be improved. Thus, the optical system has improved optical properties.

[Equation 53]

$$2 < CT_L1/ET_L1 < 3$$

(The CT_L1 is the thickness of the first lens at the optical axis. The ET_L1 is the thickness at the end of the effective region of the first lens.)

Equation 53 is related to the aberration of the optical system. When the optical system according to the embodiment satisfies Equation 53, the aberration characteristics may be improved. Thus, the optical system has improved optical properties.

[Equation 54]

$$2 < CT_L4/ET_L4 < 3$$

(The CT_L4 is the thickness of the fourth lens at the optical axis. The ET_L4 is the thickness at the end of the effective region of the fourth lens.)

Equation 54 is related to the aberration of the optical system. When the optical system according to the embodiment satisfies Equation 54, the aberration characteristics may be improved. Thus, the optical system has improved optical properties.

[Equation 55]

$$2 < Air_CT_L7/Air_ET_L7 < 4$$

(Air_CT_L7 is the distance between the seventh lens and the eighth lens at the optical axis. Air_ET_L7 is the distance between the end of the effective region of the seventh lens and the end of the effective area of the eighth lens.)

Equation 55 is related to the distortion aberration of the optical system. When the optical system according to the embodiment satisfies Equation 55, distortion aberration may be reduced in the first mode to the third mode.

[Equation 56]

$$1 < Max_dia/Min_dia < 1.7$$

(The Max_dia is the diameter of the lens having the largest clear aperture. The Min_dia is the diameter of the lens having the smallest clear aperture.)

Equation 56 is related to the aberration of the optical system. When the optical system according to the embodiment satisfies Equation 56, the aberration characteristics may be improved. Thus, the optical system has improved optical properties.

[Equation 57]

$$1 < Ave_Dia_G1/Ave_Dia_G3 < 1.5$$

(Ave_Dia_G1 is the average clear aperture of the lenses of the first lens group. Ave_Dia_G3 is the average clear aperture of the lenses of the third lens group.)

Equation 57 is related to the aberration of the optical system. When the optical system according to the embodiment satisfies Equation 57, the aberration characteristics may be improved. Thus, the optical system has improved optical properties.

[Equation 58]

$$1 < Rdy_L1_S1/Rdy_L4_S1 < 4$$

(Rdy_L1_S1 is the radius of curvature of the first surface. Rdy_L4_S1 is the radius of curvature of the seventh surface.)

Equation 58 is related to the size of the optical system. When the optical system according to the embodiment satisfies Equation 58, the optical system may have a compact size.

[Equation 59]

$$2 < Max_CT/Min_CT < 8$$

(The Max_CT is the thickness of the lens having the largest thickness at the optical axis. The Min_CT is the thickness of the lens having the smallest thickness at the optical axis.)

Equation 59 is related to the size of the optical system. When the optical system according to the embodiment satisfies Equation 59, the optical system may have a compact size.

[Equation 60]

$$0.7 < FOV(\theta)_1/Max_CRA_1 < 2;$$

$$0.7 < FOV(\theta)_2/Max_CRA_2 < 2;$$

$$0.7 < FOV(\theta)_3/Max_CRA_3 < 2;$$

(The FOV(θ)_1 is an effective field of view of the optical system in the first mode. The FOV(θ)_2 is an effective field of view of the optical system in the second mode. The FOV(θ)_3 is an effective field of view of the optical system in the third mode. The Max_CRA_1 is a chief ray of the optical system in the first mode. The Max_CRA_2 is a chief ray of the optical system in the second mode. The Max_CRA_3 is a chief ray of the optical system in the third mode.)

Equation 60 is related to the aberration of the optical system. When the optical system according to the embodiment satisfies Equation 60, the aberration characteristics may be improved. Thus, the optical system has improved optical properties.

The optical system 1000 and the optical module 2000 according to the embodiment satisfy at least one of the above equations. In detail, the optical system 1000 and the optical module 2000 may satisfy one or a plurality of equations among Equations 1 to 60. Equation 1 to Equation 60 may be independent of each other. Alternatively, Equation 1 to Equation 60 may be related to each other.

Accordingly, the optical system 1000, the optical module 2000, and the camera module including them have improved optical characteristics. In addition, the embodiment satisfies at least one of Equations 1 to 60. Accordingly, chromatic aberration and distortion aberration may be reduced when images of low magnification, medium magnification, and high magnification are implemented by moving the lens group. In addition, the optical system 1000, the optical module 2000, and a camera module including them may have a slim size.

Hereinafter, the optical system and the optical module according to a first embodiment will be described. In detail, a case in which the first lens group G1 is fixed and the second lens group G2 and the third lens group G3 are movable will be described.

Referring to FIGS. 8 and 9, the first lens 110 has positive (+) refractive power. The first surface S1 is convex with respect to the object-side surface at the optical axis. The second surface S2 is concave with respect to the sensor-side surface at the optical axis. The first lens 110 has a meniscus shape convex toward the object side. The first surface S1 may be an aspheric surface. The second surface S2 may be an aspheric surface.

The first lens 110 may have a D-cut shape.

The second lens 120 has positive (+) refractive power. The third surface S3 is convex with respect to the object-side surface at the optical axis. The fourth surface S4 is concave with respect to the sensor-side surface at the optical axis. The second lens 120 has a meniscus shape convex toward the object side. The third surface S3 may be an aspheric surface. The fourth surface S4 may be an aspheric surface.

The second lens 120 may have a D-cut shape.

The third lens 130 has negative (-) refractive power. The fifth surface S5 is concave with respect to the object-side surface at the optical axis. The sixth surface S6 is concave with respect to the sensor-side surface at the optical axis. The third lens 130 has a concave shape on both sides. The fifth surface S5 may be an aspheric surface. The sixth surface S6 may be an aspheric surface.

The fourth lens 140 has positive (+) refractive power. The seventh surface S7 is convex with respect to the object-side surface at the optical axis. The eighth surface S8 is convex with respect to the sensor-side surface at the optical axis. The fourth lens 140 has a convex shape on both sides. The seventh surface S7 may be an aspheric surface. The eighth surface S8 may be an aspheric surface.

The fourth lens 140 may have a D-cut shape.

The fifth lens 150 has negative (-) refractive power. The ninth surface S9 is convex with respect to the object-side surface at the optical axis. The tenth surface S10 is concave with respect to the sensor-side surface at the optical axis. The fifth lens 150 has a meniscus shape convex toward the object side. The ninth surface S9 may be an aspheric surface. The tenth surface S10 may be an aspherical surface.

The fifth lens 150 may have a D-cut shape.

The sixth lens 160 has positive (+) refractive power. The eleventh surface S11 is concave with respect to the object-side surface at the optical axis. The twelfth surface S12 is convex with respect to the sensor-side surface at the optical axis. The sixth lens 160 has a meniscus shape convex toward the sensor side. The eleventh surface S11 may be an aspheric surface. The twelfth surface S12 may be an aspheric surface.

The sixth lens 160 may have a D-cut shape.

The seventh lens 170 has negative (-) refractive power. The thirteenth surface S13 is concave with respect to the object-side surface at the optical axis. The fourteenth surface S14 is convex with respect to the sensor-side surface at the optical axis. The seventh lens 170 has a meniscus shape convex toward the sensor side. The thirteenth surface S13 may be an aspherical surface. The fourteenth surface S14 may be an aspheric surface.

The seventh lens 170 may have a D-cut shape.

The eighth lens 180 has positive (+) refractive power. The fifteenth surface S15 is concave with respect to the object-side surface at the optical axis. The sixteenth surface S16 is convex with respect to the sensor-side surface at the optical axis. The eighth lens 180 has a meniscus shape convex toward the sensor side. The fifteenth surface S15 may be an aspherical surface. The sixteenth surface S16 may be an aspheric surface.

The eighth lens 180 may have a D-cut shape.

Referring to FIGS. 1 to 6, the first lens group G1 is fixed. Also, the second lens group G2 and the third lens group G3 move. Accordingly, the camera module is driven in the first mode to the third mode to obtain information on the subject. For example, the second lens group G2 and the third lens group G3 are moved to the object side and the sensor side by the driving member. In this way, the camera module acquires information on the subject of low magnification to high magnification.

For example, the camera module operates in a first mode. The first lens group G1 is fixed, and the second lens group G2 and the third lens group G3 are moved by the driving member. In the first mode, the second lens group G2 and the third lens group G3 are disposed in a first position. At this time, if the initial positions of the second lens group G2 and the third lens group G3 are not the first positions, the second lens group G2 and the third lens group G3 move to the first position. That is, the second lens group G2 is disposed in a region spaced apart from the first lens group G1 by a first distance d1 by the driving member. Also, the third lens group G3 is disposed in a region spaced apart from the second lens group G2 by a second distance d2 by the driving member. The first distance d1 is a central distance between the third lens 130 and the fourth lens 140 at the optical axis. In addition, the second distance d2 is a central distance between the fourth lens 140 and the fifth lens 150 at the optical axis.

Unlike this, when the initial positions of the second lens group G2 and the third lens group (G3) are the first positions, the second lens group G2 and the third lens group G3 are not moved and are placed in the first position. Accordingly, the second lens group G2 is disposed in a region spaced apart from the first lens group G1 by the first distance d1. Also, the third lens group G3 is disposed in a region spaced apart from the second lens group G2 by the second distance d2.

Also, the camera module operates in the second mode. The first lens group G1 is fixed, and the second lens group G2 and the third lens group G3 are moved by the driving member. In the second mode, the second lens group G2 and the third lens group G3 are disposed in a second position. At this time, if the initial positions of the second lens group G2 and the third lens group G3 are not the second positions, the second lens group G2 and the third lens group G3 move to the second position. That is, the second lens group G2 is disposed in a region spaced apart from the first lens group G1 by a third distance d3 by the driving member. Also, the third lens group G3 is disposed in a region spaced apart from the second lens group G2 by a fourth distance d4 by the driving member. The third distance d3 is a central distance between the third lens 130 and the fourth lens 140 at the optical axis. In addition, the fourth distance d4 is a central distance between the fourth lens 140 and the fifth lens 150 at the optical axis.

Unlike this, when the initial positions of the second lens group G2 and the third lens group G3 are the second positions, the second lens group G2 and the third lens group G3 are not moved and are placed in the second position. Accordingly, the second lens group G2 is disposed in a region spaced apart from the first lens group G1 by the third distance d3. Also, the third lens group G3 is disposed in a region spaced apart from the second lens group G2 by the fourth distance d4.

Also, the camera module operates in the third mode. The first lens group G1 is fixed, and the second lens group G2 and the third lens group G3 are moved by the driving member. In the third mode, the second lens group G2 and the third lens group G3 are disposed in a third position. At this time, if the initial positions of the second lens group G2 and the third lens group G3 are not the third positions, the second lens group G2 and the third lens group G3 move to the third position. That is, the second lens group G2 is disposed in a region spaced apart from the first lens group G1 by a fifth distance d5 by the driving member. Also, the third lens group G3 is disposed in a region spaced apart from the second lens group G2 by a sixth distance d6 by the driving member. The fifth distance d5 is a central distance between the third lens 130 and the fourth lens 140 at the optical axis. In addition, the sixth distance d6 is a central distance between the fourth lens 140 and the fifth lens 150 at the optical axis.

Unlike this, when the initial positions of the second lens group G2 and the third lens group G3 are the third positions, the second lens group G2 and the third lens group G3 are not moved and are placed in the third position. Accordingly, the second lens group G2 is disposed in a region spaced apart from the first lens group G1 by the fifth distance d5. Also, the third lens group G3 is disposed in a region spaced apart from the second lens group G2 by the sixth distance d6.

The first to third lens groups have effective focal lengths and refractive powers as shown in FIG. 10. In addition, when operating in the first mode to the third mode, the optical system 1000 has an effective focal length (EFL), total track length (TTL), back focal length (BFL), field of view, F number, entrance pupil (EPD), and magnification as shown in FIG. 11.

In addition, the first to eighth lenses have a thickness ratio as shown in FIG. 12. The optical axis thickness/edge thickness of the first lens to the eighth lens of the optical system 1000 is 3 or less. Alternatively, the edge thickness/optical axis thickness of the first lens to the eighth lens is 3 or less.

Referring to FIG. 13, the optical system 1000 has a small difference in chief ray angle in the first to third modes.

FIG. 14 is a table for explaining aspheric coefficients of the first lens 110 to the eighth lens 180 of the optical system 1000. Referring to FIG. 15 and 16 are tables for explaining the sag of the first lens 110 to the eighth lens 180.

Referring to FIGS. 15 and 16, the absolute values of the sag of the first to eighth lenses 110 to 180 may increase while extending from the optical axis to the end of the effective region (clear aperture). In detail, the absolute value of the sag of the first to eighth lenses 110 to 180 may only increase while extending from the optical axis to the end of the effective region (clear aperture). Accordingly, the absolute value of the sag may have a monotone increasing tendency.

Accordingly, an inflection point is not formed on the surfaces of the first lens 110 to the eighth lens 180. Accordingly, the first lens 110 to the eighth lens 180 may be easily manufactured.

FIG. 17 is a D-cut ratio of lenses having a non-circular shape among the first lens group G1, the second lens group G2, and the third lens group G3. The D-cut ratio is a ratio before and after the D-cut when the minimum clear aperture of the first lens group G1, the second lens group G2, and the third lens group G3 is to be satisfied with a set size. In detail, the D-cut ratio is a ratio when the minimum clear aperture of the first lens group G1 is 5.2 mm and the minimum clear aperture of the second lens group G2 and the third lens group G3 are 4.2 mm. That is, the D-cut ratio is defined as a CH/CA value of each lens.

In addition, the optical system 1000 has excellent MTF characteristics in the first mode to the third mode. FIG. 18 is a graph of MTF characteristics of the optical system 1000 operating in the first mode. FIG. 20 is a graph of MTF characteristics of the optical system 1000 operating in the second mode. FIG. 22 is a graph of MTF characteristics of the optical system 1000 operating in the third mode.

In addition, the optical system 1000 has excellent aberration characteristics. FIG. 19 is a graph of aberration characteristics of the optical system 1000 operating in the first mode. FIG. 21 is a graph of aberration characteristics of the optical system 1000 operating in the second mode. FIG. 23 is a graph of aberration characteristics of the optical system 1000 operating in the third mode. In the graphs of FIGS. 19, 21 and 23, the left graph is a longitudinal spherical aberration graph, the center graph is an astigmatic field curve graph, and the right graph is a distortion graph. In the graphs, the X-axis is focal length (mm) or distortion (%). Also, the Y axis is the height of the image. In addition, the spherical aberration graph is a graph for light in a wavelength band of about 435 nm, about 486 nm, about 546 nm, about 587 nm, and about 656 nm. Also, the astigmatic field curve graph and the distortion graph are graphs for light in a 546 nm wavelength band.

Hereinafter, the optical system and the optical module according to a second embodiment will be described. In detail, a case in which the first lens group G1 is fixed and the second lens group G2 and the third lens group G3 are movable will be described.

Referring to FIGS. 24 and 25, the first lens 110 has positive (+) refractive power. The first surface S1 is convex with respect to the object-side surface at the optical axis. The second surface S2 is concave with respect to the sensor-side surface at the optical axis. The first lens 110 has a meniscus shape convex toward the object side. The first surface S1 may be an aspheric surface. The second surface S2 may be an aspheric surface.

The first lens 110 may have a D-cut shape.

The clear aperture of the first lens 110 may be larger than that of other lenses.

The second lens 120 has positive (+) refractive power. The third surface S3 is convex with respect to the object-side surface at the optical axis. The fourth surface S4 is convex with respect to the sensor-side surface at the optical axis. The second lens 120 has a shape in which both sides are convex. The third surface S3 may be an aspheric surface. The fourth surface S4 may be an aspheric surface.

The second lens 120 may have a D-cut shape.

The third lens 130 has negative (-) refractive power. The fifth surface S5 is concave with respect to the object-side surface at the optical axis. The sixth surface S6 is concave with respect to the sensor-side surface at the optical axis. The third lens 130 has a concave shape on both sides. The fifth surface S5 may be an aspheric surface. The sixth surface S6 may be an aspheric surface.

The third lens 130 may have a D-cut shape.

The fourth lens 140 has positive (+) refractive power. The refractive power of the fourth lens is greater than the refractive power of the other lenses.

The seventh surface S7 is convex with respect to the object-side surface at the optical axis. The eighth surface S8 is convex with respect to the sensor-side surface at the optical axis. The fourth lens 140 has a convex shape on both sides. The seventh surface S7 may be an aspheric surface. The seventh surface S7 may be an aspheric surface.

The fourth lens 140 may have a D-cut shape.

An aperture may be disposed between the third lens 130 and the fourth lens 140.

The fifth lens 150 has negative (-) refractive power. The ninth surface S9 is concave with respect to the object-side surface at the optical axis. The tenth surface S 10 is concave with respect to the sensor-side surface at the optical axis. The fifth lens 150 has a concave shape on both sides. The ninth surface S9 may be an aspheric surface. The tenth surface S10 may be an aspherical surface.

The fifth lens 150 may have a D-cut shape.

The sixth lens 160 has positive (+) refractive power. The eleventh surface S11 is concave with respect to the object-side surface at the optical axis. The twelfth surface S12 is convex with respect to the sensor-side surface at the optical axis. The sixth lens 160 has a meniscus shape convex toward the sensor side. The eleventh surface S11 may be an aspheric surface. The twelfth surface S12 may be an aspheric surface.

The sixth lens 160 may have a D-cut shape.

The seventh lens 170 has negative (-) refractive power. The thirteenth surface S13 is concave with respect to the object-side surface at the optical axis. The fourteenth surface S14 is concave with respect to the sensor-side surface at the optical axis. The seventh lens 170 has a concave shape on both sides. The thirteenth surface S13 may be an aspherical surface. The fourteenth surface S14 may be an aspheric surface.

The seventh lens 170 may have a D-cut shape.

The clear aperture of the seventh lens 170 may be smaller than that of other lenses.

The eighth lens 180 has negative (-) refractive power. The fifteenth surface S15 is convex with respect to the object-side surface at the optical axis. The sixteenth surface S16 is concave with respect to the sensor-side surface at the optical axis. The eighth lens 180 has a meniscus shape convex toward the object side. The fifteenth surface S15 may be an aspherical surface. The sixteenth surface S16 may be an aspheric surface.

The eighth lens 180 may have a D-cut shape.

The third lens 130 and the fourth lens 140 include glass. Accordingly, the overall length of the optical system may be reduced.

The zoom magnification of the optical system may be 1.5 times or more.

When operating in the first mode to the third mode, a minimum distance between the lenses of the first lens group to the third lens group may be 0.2 mm to 8 mm.

The first to third lens groups have lengths and refractive powers as shown in FIG. 26. In addition, when operating in the first mode to the third mode, the optical system 1000 has an effective focal length (EFL), total track length (TTL), back focal length (BFL), field of view, F number, entrance pupil (EPD), and TD as shown in FIG. 27. The TD is the length from the first surface to the sixteenth surface.

Also, the first lens to the eighth lens have thickness ratios as shown in FIG. 28. The optical axis thickness/edge thickness of the first lens to the eighth lens of the optical system 1000 is 3 or less. Alternatively, the edge thickness/optical axis thickness of the first lens to the eighth lens is 3 or less.

FIG. 29 is a D-cut ratio of lenses having a non-circular shape among the first lens group G1, the second lens group G2, and the third lens group G3. The D-cut ratio is a ratio before and after the D-cut when the minimum clear aperture of the first lens group G1, the second lens group G2, and the third lens group G3 is to be satisfied with a set size.

FIG. 30 is a view illustrating a mobile terminal to which the camera module according to the embodiment is applied.

Referring to FIG. 30, the mobile terminal 1 may include a camera module 10 disposed on the rear.

The camera module 10 may include an image photographing function. In addition, the camera module 10 may include at least one of an auto focus function, a zoom function, and an OIS function.

The camera module 10 may process an image frame of a still image or a video obtained by an image sensor unit in a photographing mode or a video call mode. The processed image frame may be displayed on a display unit (not shown) of the mobile terminal 1. It may also be stored in a memory (not shown). In addition, although not shown in the drawing, the camera module may be further disposed on the front surface of the mobile terminal 1.

For example, the camera module 10 may include a first camera module 10A and a second camera module 10B. In this case, at least one of the first camera module 10A and the second camera module 10B may include the optical system 1000. Accordingly, the camera module 10 may have improved optical characteristics. In addition, an autofocus (AF) function may be provided for subjects located at a short distance of infinity to 40 mm or less. In addition, the optical system 1000 may minimize the amount of movement of the lens group. Accordingly, the camera module may operate at low power. In addition, it is possible to minimize the amount of curvature generated according to movement. In addition, the camera module may have a compact size.

The mobile terminal 1 may further include an autofocus device 31. The autofocus device 31 may include an autofocus function using a laser. The autofocus device 31 may be used under a condition in which an automatic focus function using an image of the camera module 10 is reduced. For example, the autofocus device 31 may be used at a close distance of 10 m or less or in a dark environment. The autofocus device 31 may include a light emitting unit including a vertical cavity surface emission laser (VCSEL) semiconductor device and a light receiving unit that converts light energy such as a photodiode into electrical energy.

In addition, the mobile terminal 1 may further include a flash module 33. The flash module 33 may include a light emitting device therein. The flash module 33 may be operated by camera operation of the mobile terminal or user control.

The characteristics, structures, effects, and the like described in the above-described embodiments are included in at least one embodiment of the present invention, but are not limited to only one embodiment. Furthermore, the characteristic, structure, and effect illustrated in each embodiment may be combined or modified for other embodiments by a person skilled in the art. Accordingly, it is to be understood that such combination and modification are included in the scope of the present invention.

In addition, embodiments are mostly described above, but the embodiments are merely examples and do not limit the present invention, and a person skilled in the art may appreciate that several variations and applications not presented above may be made without departing from the essential characteristic of embodiments. For example, each component specifically represented in the embodiments may be varied. In addition, it should be construed that differences related to such a variation and such an application are included without departing from the scope of the present invention defined in the following claims.

## Claims

**1.** An optical system (2000) comprising;

a first lens group (G1), a second lens group (G2), and a third lens group (G3) sequentially disposed along an optical axis (OA) from an object side toward a sensor side, and each including at least one lens,
wherein the first lens group (G1) includes a first lens (110), a second lens (120), and a third lens (130) sequentially disposed along the optical axis in a direction from the object side to the sensor side,
wherein the second lens group (G2) includes a fourth lens (140) and a fifth lens (150) sequentially disposed along the optical axis in a direction from the object side to the sensor side,
wherein the third lens group (G3) includes a sixth lens (160), a seventh lens (170), and an eighth lens (180) sequentially disposed along the optical axis from the object side to the sensor side,
wherein the first lens group (G1) is fixed, and the second lens group (G2) and the third lens group (G3) move toward the sensor side in a first mode and move toward the object side in a third mode,
wherein the fourth lens (140) has a positive (+) refractive power,
wherein the fifth lens (150) has negative (-) refractive power,
wherein an object-side surface (S1) of the first lens (110) is convex toward the object side,
wherein a sensor-side surface (S16) of the eighth lens (180) is convex toward the sensor side,

wherein the third lens (130) and the fourth lens (140) includes glass, and
**characterized in that**
the optical system satisfies the following equation:

[Equation]

$$13 < EFL < 29$$

wherein in the equation, EFL means an effective focal length (mm) of the optical system, and **in that** the third lens (130) has a negative (-) refractive power.

**2.** The optical system of claim 1, wherein the first lens and the eighth lens have a D-cut shape.

**3.** The optical system of claim 1 or 2,

wherein a sensor-side surface (S6) of the third lens (130) is concave on the sensor side,
wherein an object-side surface (S6) of the fourth lens (140) is convex toward the object side, and
wherein an object-side surface (S15) of the eighth lens (180) is concave on the object side.

**4.** The optical system of any one of claims 1 to 3, wherein the optical system satisfies the following equations:

[Equations]

$$0 < CT_Lx / ET_Ly < 3$$

$$0 < ET_Lx / CT_Ly < 3$$

wherein CT_Lx is a thickness of an x-th lens at the optical axis. The ET_Ly is a thickness at an end of an effective region of a y-th lens. x is a natural number of $1 \leq x \leq 8$. y is a natural number of $1 \leq y \leq 8$. x and y satisfy x=y.

**5.** The optical system of any one of claims 1 to 4, wherein the first lens group, the second lens group, and the third lens group satisfy the following equations:

[Equations]

$$0 < CH_G1 - CH_G2 < 1$$

$$0 < CH_G1 - CH_G3 < 1$$

wherein CH_G1 is a minimum clear aperture of the lenses of the first lens group, CH_G2 is a minimum clear aperture of the lenses of the second lens group and CH_G3 is a minimum clear aperture of the lenses of the third lens group.

**6.** The optical system of any one of claims 1 to 5,

wherein the second lens group has positive refractive power,
wherein the first lens group, the second lens group, and the third lens group satisfy the following equation:

[Equation]

$$1 < TD_G1/TD_G2 < 2$$

wherein TD_G1 is a length of the first lens group and TD_G2 is a length of the second lens group.

**7.** The optical system of claim 6,

wherein the first lens group (G1) has negative refractive power,
wherein the third lens group (G3) has negative refractive power, and
wherein the first lens group, the second lens group, and the third lens group satisfy the following equation:

[Equation]

$$0.8 < TD_G3/TD_G2 < 1.5$$

wherein TD_G2 is the length of the second lens group and TD_G3 is a length of the third lens group.

**8.** The optical system of any one of claims 1 to 7, wherein the first lens group, the second lens group, and the third lens group satisfy the following equation:

[Equation]

$$40 < Ave_ABV < 50$$

wherein Ave_ABV is an average of Abbe's numbers of the first to eighth lenses.

**9.** The optical system of any one of claims 1 to 8,

wherein an object-side surface (S5) of the third lens (130) has a concave shape,
wherein the first lens group, the second lens group, and the third lens group satisfy the following equation:

[Equation]

$$1.5 < Ave_Ind < 1.8$$

wherein Ave_Ind is an average of refractive indices of the first to eighth lenses.

**10.** The optical system of any one of claims 1 to 9,
wherein the first lens group, the second lens group, and the third lens group satisfy the following equations:

[Equations]

$$0.7 < FOV(\theta)_1/Max_CRA_1 < 2$$

$$0.7 < FOV(\theta)_2/Max_CRA_2 < 2$$

$$0.7 < FOV(\theta)_3/Max_CRA_3 < 2$$

wherein FOV(θ)_1 is an effective field of view of the optical system in the first mode, FOV(θ)_2 is an effective field of view of the optical system in a second mode, FOV(θ)_3 is an effective field of view of the optical system in the third mode, Max_CRA_1 is a chief ray of the optical system in the first mode, Max_CRA_2 is a chief ray of the optical system in the second mode, Max_CRA_3 is a chief ray of the optical system in the third mode.

**11.** The optical system of any one of claims 1 to 10,
wherein an object-side surface (S11) of the sixth lens (160) has a concave shape.

**12.** The optical system of any one of claims 1 to 11,
wherein the first lens group (G1) and the third lens group (G3) have refractive powers of the same sign.

**13.** The optical system of any one of claims 1 to 12,
wherein the eighth lens (180) has a positive refractive power on the optical axis.

**14.** The optical system of any one of claims 1 to 13,

wherein a composite focal length of the first lens, the second and third lens is f123,
wherein the following equation satisfies:

[Equation]

$$-25 < f123 < -5.$$

**15.** An optical module comprising:

an optical system, wherein the optical system is an optical system according to any of claims 1 to 14, and
an optical path changing member disposed on the object side of the first lens of the optical system.

**Patentansprüche**

**1.** Optisches System (2000) umfassend:

eine erste Linsengruppe (G1), eine zweite Linsengruppe (G2), und eine dritte Linsengruppe (G3), die entlang einer optischen Achse (OA) von einer Objektseite zu einer Sensorseite hin nacheinander angeordnet sind, und jeweils wenigstens eine Linse umfassen,
wobei die erste Linsengruppe (G1) eine erste Linse (110), eine zweite Linse (120), und eine dritte Linse (130) umfasst, die entlang der optischen Achse in einer Richtung von der Objektseite zu der Sensorseite nacheinander angeordnet sind,
wobei die zweite Linsengruppe (G2) eine vierte Linse (140) und eine fünfte Linse (150) umfasst, die entlang der optischen Achse in einer Richtung von der Objektseite zu der Sensorseite nacheinander angeordnet sind,
wobei die dritte Linsengruppe (G3) eine sechste Linse (160), eine siebte Linse (170), und eine achte Linse (180) umfasst, die entlang der optischen Achse von der Objektseite zu der Sensorseite nacheinander angeordnet sind,
wobei die erste Linsengruppe (G1) fixiert ist, und die zweite Linsengruppe (G2) und die dritte Linsengruppe (G3) sich in einem ersten Modus zu der Sensorseite hin bewegen und sich in einem dritten Modus zu der Objektseite hin bewegen,
wobei die vierte Linse (140) eine positive (+) Brechkraft aufweist,
wobei die fünfte Linse (150) eine negative (-) Brechkraft aufweist,
wobei eine objektseitige Oberfläche (S1) der ersten Linse (110) konvex zu der Objektseite hin ist,
wobei eine sensorseitige Oberfläche (S16) der achten Linse (180) konvex zu der Sensorseite hin ist,
wobei die dritte Linse (130) und die vierte Linse (140) Glas umfassen, und
**dadurch gekennzeichnet, dass**
das optische System die folgende Gleichung erfüllt:

[Gleichung]

$$13 < EFL < 29$$

wobei in der Gleichung EFL eine effektive Brennweite (mm) des optischen Systems bedeutet,
und dass die dritte Linse (130) eine negative (-) Brechkraft aufweist.

**2.** Optisches System nach Anspruch 1, wobei die erste Linse und die achte Linse eine D-Schnitt-Form aufweisen.

**3.** Optisches System nach Anspruch 1 oder 2,

wobei eine sensorseitige Oberfläche (S6) der dritten Linse (130) auf der Sensorseite konkav ist,
wobei eine objektseitige Oberfläche (S6) der vierten Linse (140) zu der Objektseite hin konvex ist, und
wobei eine objektseitige Oberfläche (S15) der achten Linse (180) auf der Objektseite konkav ist.

**4.** Optisches System nach einem der Ansprüche 1 bis 3, wobei das optische System die folgenden Gleichungen erfüllt:

[Gleichungen]

$$0 < CT_Lx / ET_Ly < 3$$

$$0 < ET_Lx / CT_Ly < 3$$

wobei CT_Lx is eine Dicke einer x-ten Linse auf der optischen Achse ist, ET_Ly eine Dicke an einem Ende eines effektiven Bereichs einer y-ten Linse ist, x eine natürliche Zahl von $1 \leq x \leq 8$ ist, y eine natürliche Zahl von $1 \leq y \leq 8$ ist, und x und y x=y erfüllen.

**5.** Optisches System nach einem der Ansprüche 1 bis 4, wobei die erste Linsengruppe, die zweite Linsengruppe, und die dritte Linsengruppe die folgenden Gleichungen erfüllen:

[Gleichungen]

$$0 < CH_G1 - CH_G2 < 1$$

$$0 < CH_G1 - CH_G3 < 1$$

wobei CH_G1 eine minimale klare Apertur der Linsen der ersten Linsengruppe ist, CH_G2 eine minimale klare Apertur der Linsen der zweiten Linsengruppe ist, und CH_G3 eine minimale klare Apertur der Linsen der dritten Linsengruppe ist.

**6.** Optisches System nach einem der Ansprüche 1 bis 5,

wobei die zweite Linsengruppe eine positive Brechkraft aufweist,
wobei die erste Linsengruppe, die zweite Linsengruppe und die dritte Linsengruppe die folgende Gleichung erfüllen:

[Gleichung]

$$1 < TD_G1/TD_G2 < 2$$

wobei TD_G1 eine Länge der ersten Linsengruppe ist und TD_G2 eine Länge der zweiten Linsengruppe ist.

**7.** Optisches System nach Anspruch 6,

wobei die erste Linsengruppe (G1) eine negative Brechkraft aufweist,
wobei die dritte Linsengruppe (G3) eine negative Brechkraft aufweist, und
wobei die erste Linsengruppe, die zweite Linsengruppe, und die dritte Linsengruppe die folgende Gleichung erfüllen:

[Gleichung]

$$0.8 < TD_G3/TD_G2 < 1.5$$

wobei TD_G2 die Länge der zweiten Linsengruppe ist und TD_G3 eine Länge der dritten Linsengruppe ist.

**8.** Optisches System nach einem der Ansprüche 1 bis 7, wobei die erste Linsengruppe, die zweite Linsengruppe, und die dritte Linsengruppe die folgende Gleichung erfüllen:

[Gleichung]

$$40 < Ave_ABV < 50$$

wobei Ave_ABV ein Mittelwert der Abbe-Zahlen der ersten bis achten Linsen ist.

**9.** Optisches System nach einem der Ansprüche 1 bis 8,

wobei eine objektseitige Oberfläche (S5) der dritten Linse (130) eine konkave Form aufweist,
wobei die erste Linsengruppe, die zweite Linsengruppe, und die dritte Linsengruppe die folgende Gleichung erfüllen:

[Gleichung]

$$1.5 < Ave_Ind < 1.8$$

wobei Ave_Ind ein Mittelwert von Brechungsindizes der ersten bis achten Linsen ist.

**10.** Optisches System nach einem der Ansprüche 1 bis 9,

wobei die erste Linsengruppe, die zweite Linsengruppe, und die dritte Linsengruppe die folgenden Gleichungen erfüllen:

[Gleichungen]

$$0.7 < FOV(\theta)_1/Max_CRA_1 < 2$$

$$0.7 < FOV(\theta)_2/Max_CRA_2 < 2$$

$$0.7 < FOV(\theta)_3/Max_CRA_3 < 2$$

wobei FOV(θ)_1 ein effektives Sichtfeld des optischen Systems in dem ersten Modus ist, FOV(θ)_2 ein effektives Sichtfeld des optischen Systems in dem zweiten Modus ist, FOV(θ)_3 ein effektives Sichtfeld des optischen Systems in dem dritten Modus ist, Max_CRA_1 ein Hauptstrahl des optischen Systems in dem ersten Modus ist, Max_CRA_2 ein Hauptstrahl des optischen Systems in dem zweiten Modus ist, Max_CRA_3 ein Hauptstrahl des optischen Systems in dem dritten Modus ist.

**11.** Optisches System nach einem der Ansprüche 1 bis 10,
wobei eine objektseitige Oberfläche (S11) der sechsten Linse (160) eine konkave Form aufweist.

**12.** Optisches System nach einem der Ansprüche 1 bis 11,
wobei die erste Linsengruppe (G1) und die dritte Linsengruppe (G3) Brechkräfte desselben Vorzeichens aufweisen.

**13.** Optisches System nach einem der Ansprüche 1 bis 12,
wobei die achte Linse (180) eine positive Brechkraft auf der optischen Achse aufweist.

**14.** Optisches System nach einem der Ansprüche 1 bis 13,

wobei eine zusammengesetzte Brennweite der ersten Linse, der zweiten und der dritten Linse f123 ist,
wobei die folgende Gleichung erfüllt ist:

[Gleichung]

$$-25 < f123 < -5.$$

**15.** Optisches Modul umfassend:

ein optisches System, wobei das optische System ein optisches System nach einem der Ansprüche 1 bis 14 ist, und
ein Element zum Ändern des optischen Pfads, das auf der Objektseite der ersten Linse des optischen Systems angeordnet ist.

## Revendications

**1.** Système optique (2000) comprenant :

un premier groupe de lentilles (G1), un deuxième groupe de lentilles (G2) et un troisième groupe de lentilles (G3) disposés séquentiellement le long d'un axe optique (OA) depuis un côté objet vers un côté capteur, et comprenant chacun au moins une lentille,
dans lequel le premier groupe de lentilles (G1) comprend une première lentille (110), une deuxième lentille (120) et une troisième lentille (130) disposées séquentiellement le long de l'axe optique dans un sens allant depuis le côté objet vers le côté capteur,
dans lequel le deuxième groupe de lentilles (G2) comprend une quatrième lentille (140) et une cinquième lentille (150) disposées séquentiellement le long de l'axe optique dans un sens allant du côté objet vers le côté capteur,
dans lequel le troisième groupe de lentilles (G3) comprend une sixième lentille (160), une septième lentille (170) et une huitième lentille (180) disposées séquentiellement le long de l'axe optique depuis le côté objet vers le côté capteur,
dans lequel le premier groupe de lentilles (G1) est fixe, et le deuxième groupe de lentilles (G2) et le troisième groupe de lentilles (G3) se déplacent vers le côté capteur dans un premier mode et se déplacent vers le côté objet dans un troisième mode,
dans lequel la quatrième lentille (140) a une puissance de réfraction positive (+),
dans lequel la cinquième lentille (150) a une puissance de réfraction négative (-),
dans lequel une surface côté objet (S1) de la première lentille (110) est convexe vers le côté objet,
dans lequel une surface côté capteur (S16) de la huitième lentille (180) est convexe vers le côté capteur,
dans lequel la troisième lentille (130) et la quatrième lentille (140) comprennent du verre, et **caractérisé en ce que**
le système optique satisfait à l'équation suivante :

**[Équation]**

$$13 < EFL < 29$$

dans lequel, dans l'équation, EFL désigne la distance focale effective (mm) du système optique, et **en ce que** la troisième lentille (130) a une puissance de réfraction négative (-).

**2.** Système optique selon la revendication 1, dans lequel la première lentille et la huitième lentille ont une forme en D.

**3.** Système optique selon la revendication 1 ou 2,

dans lequel une surface côté capteur (S6) de la troisième lentille (130) est concave du côté capteur,
dans lequel une surface côté objet (S6) de la quatrième lentille (140) est convexe vers le côté objet, et
dans lequel une surface côté objet (S15) de la huitième lentille (180) est concave du côté objet.

**4.** Système optique selon l'une quelconque des revendications 1 à 3, dans lequel le système optique satisfait aux équations suivantes :

[Équations]

$$0 < CT_Lx / ET_Ly < 3$$

$$0 < ET_Lx / CT_Ly < 3$$

où
CT_Lx est une épaisseur d'une x-ième lentille au niveau de l'axe optique. ET_Ly est l'épaisseur à une extrémité d'une région effective d'une y-ième lentille. x est un entier naturel tel que $1 \leq x \leq 8$. y est un entier naturel tel que $1 \leq y \leq 8$. x et y satisfont à la condition x = y .

**5.** Système optique selon l'une quelconque des revendications 1 à 4, dans lequel le premier groupe de lentilles, le deuxième groupe de lentilles et le troisième groupe de lentilles satisfont les équations suivantes :

**[Équations]**

$$0 < CH_G1 - CH_G2 < 1$$

$$0 < CH_G1 - CH_G3 < 1$$

où

CH_G1 est l'ouverture nette minimale des lentilles du premier groupe de lentilles.
CH_G2 est l'ouverture nette minimale des lentilles du deuxième groupe de lentilles
CH_G3 est l'ouverture nette minimale des lentilles du troisième groupe de lentilles.

**6.** Système optique selon l'une quelconque des revendications 1 à 5,

dans lequel le deuxième groupe de lentilles a une puissance de réfraction positive,
dans lequel le premier groupe de lentilles, le deuxième groupe de lentilles et le troisième groupe de lentilles satisfont l'équation suivante :

**[Équation]**

$$1 < TD_G1/TD_G2 < 2$$

dans laquelle TD_G1 est une longueur du premier groupe de lentilles et
TD_G2 est une longueur du deuxième groupe de lentilles.

**7.** Système optique selon la revendication 6,

dans lequel le premier groupe de lentilles (G1) a une puissance de réfraction négative,
dans lequel le troisième groupe de lentilles (G3) a une puissance de réfraction négative, et dans lequel le premier groupe de lentilles, le deuxième groupe de lentilles et le troisième groupe de lentilles satisfont l'équation suivante :

**[Équation]**

$$0{,}8 < TD_G3/TD_G2 < 1{,}5$$

où TD_G2 est la longueur du deuxième groupe de lentilles et TD_G3 est une longueur du troisième groupe de lentilles.

**8.** Système optique selon l'une quelconque des revendications 1 à 7, dans lequel le premier groupe de lentilles, le deuxième groupe de lentilles et le troisième groupe de lentilles satisfont à l'équation suivante :

**[Équation]**

$$40 < Ave_ABV < 50$$

où
Ave_ABV est une moyenne des nombres d'Abbe des première à huitième lentilles.

**9.** Système optique selon l'une quelconque des revendications 1 à 8,

dans lequel une surface côté objet (S5) de la troisième lentille (130) présente une forme concave,
dans lequel le premier groupe de lentilles, le deuxième groupe de lentilles et le troisième groupe de lentilles satisfont à l'équation suivante :

**[Équation]**

$$1{,}5 < Ind_Ave < 1{,}8$$

où
Ave_Ind est une moyenne des indices de réfraction des première à huitième lentilles.

**10.** Système optique selon l'une quelconque des revendications 1 à 9,

dans lequel le premier groupe de lentilles, le deuxième groupe de lentilles et le troisième groupe de lentilles satisfont
aux équations suivantes :

**[Équations]**

$$0{,}7 < FOV(\theta)_1/Max_CRA_1 < 2$$

$$0{,}7 < FOV(\theta)_2/Max_CRA_2 < 2$$

$$0{,}7 < FOV(\theta)_3/Max_CRA_3 < 2$$

où
FOV(θ)_1 est un champ de vision effectif du système optique dans le premier mode
FOV(θ)_2 est un champ de vision effectif du système optique dans un deuxième mode
FOV(θ)_3 est un champ de vision effectif du système optique dans le troisième mode
Max_CRA_1 est un rayon principal du système optique dans le premier mode
Max_CRA_2 est un rayon principal du système optique dans le deuxième mode
Max_CRA_3 est un rayon principal du système optique dans le troisième mode.

**11.** Système optique selon l'une quelconque des revendications 1 à 10,
dans lequel une surface côté objet (S11) de la sixième lentille (160) présente une forme concave.

**12.** Système optique selon l'une quelconque des revendications 1 à 11,
dans lequel le premier groupe de lentilles (G1) et le troisième groupe de lentilles (G3) ont des puissances de réfraction de même signe.

**13.** Système optique selon l'une quelconque des revendications 1 à 12,
dans lequel la huitième lentille (180) présente une puissance de réfraction positive sur l'axe optique.

**14.** Système optique selon l'une quelconque des revendications 1 à 13,

dans lequel une distance focale composite de la première lentille, de la deuxième et de la troisième lentille est f123,
dans lequel l'équation suivante est satisfaite :

**[Équation]**

$$-25 < f123 < -5.$$

**15.** Module optique comprenant :

un système optique, dans lequel le système optique est un système optique selon l'une quelconque des revendications 1 à 14, et
un élément de modification du trajet optique disposé du côté objet de la première lentille du système optique.

【Fig. 1】

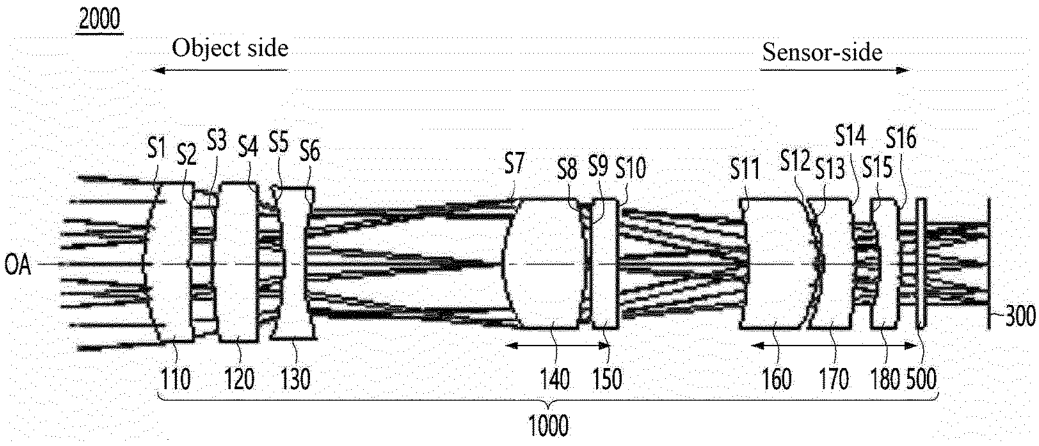
2000
Object side
Sensor-side
S1
S2
S3
S4
S5
S6
S7
S8
S9
S10
S11
S12
S13
S14
S15
S16
OA
300
110
120
130
140
150
160
170
180
500
1000

【Fig. 2】

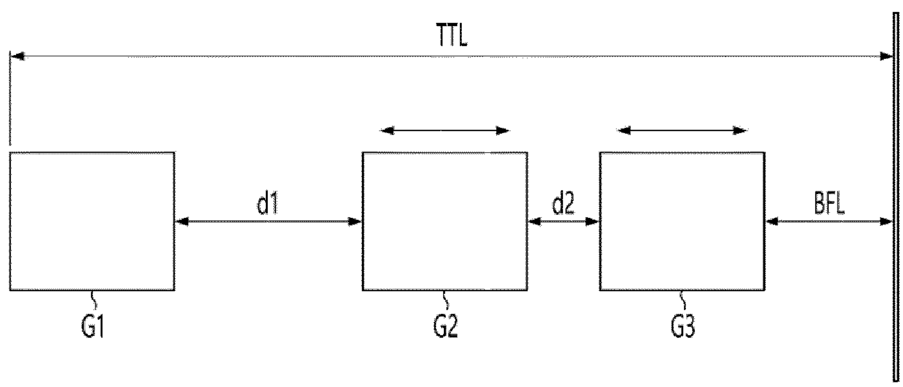
TTL
d1
d2
BFL
G1
G2
G3

【Fig. 3】

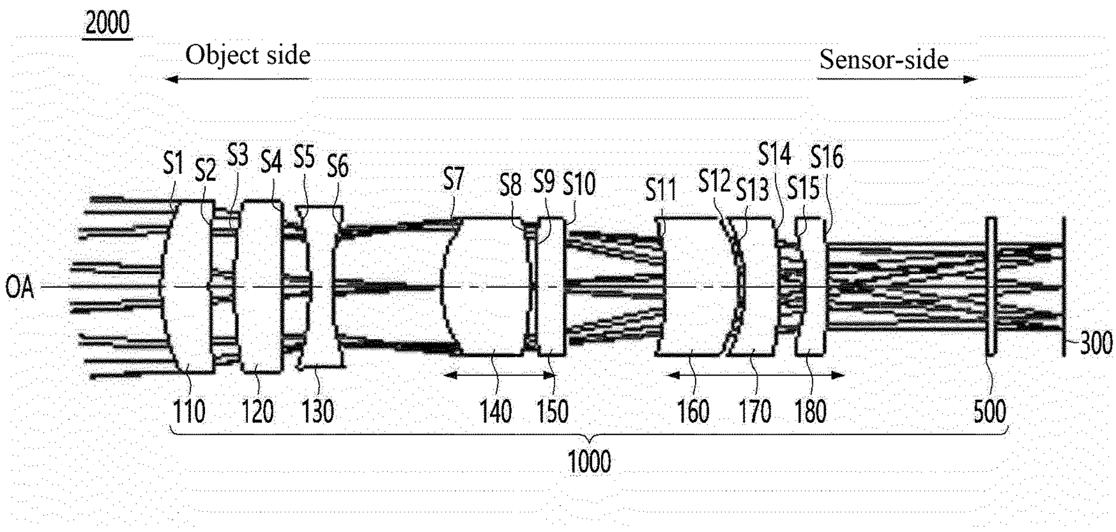
2000
Object side
Sensor-side
S1
S2
S3
S4
S5
S6
S7
S8
S9
S10
S11
S12
S13
S14
S15
S16
OA
300
110
120
130
140
150
160
170
180
500
1000

【Fig. 4】

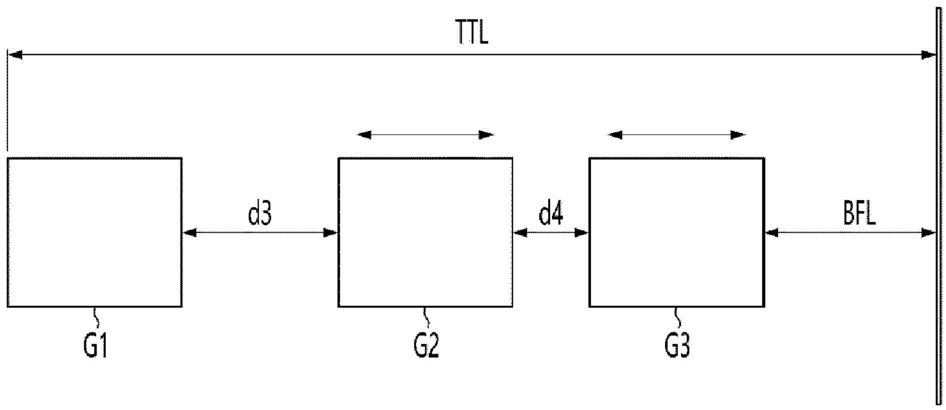
TTL
d3
d4
BFL
G1
G2
G3

【Fig. 5】

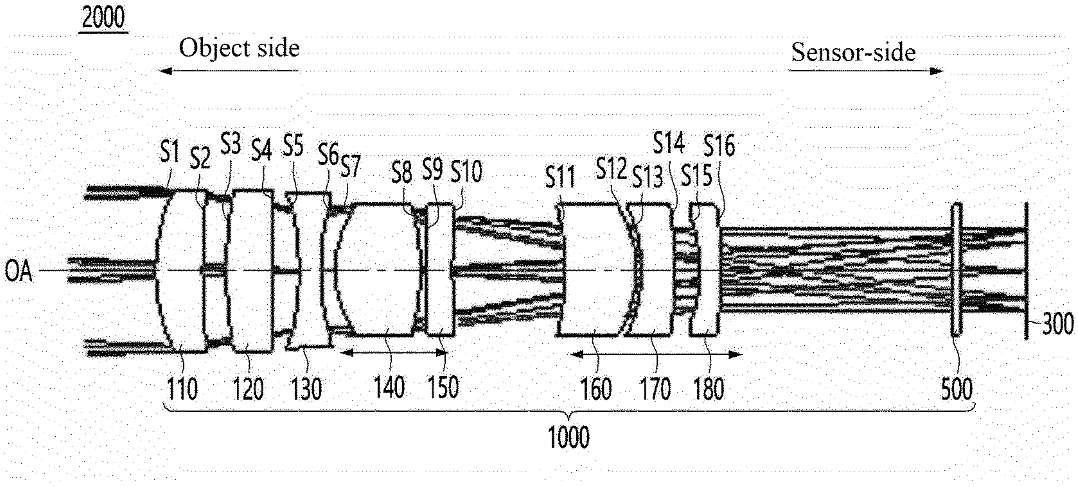
2000
Object side
Sensor-side
S1
S2
S3
S4
S5
S6
S7
S8
S9
S10
S11
S12
S13
S14
S15
S16
OA
300
110
120
130
140
150
160
170
180
500
1000

【Fig. 6】

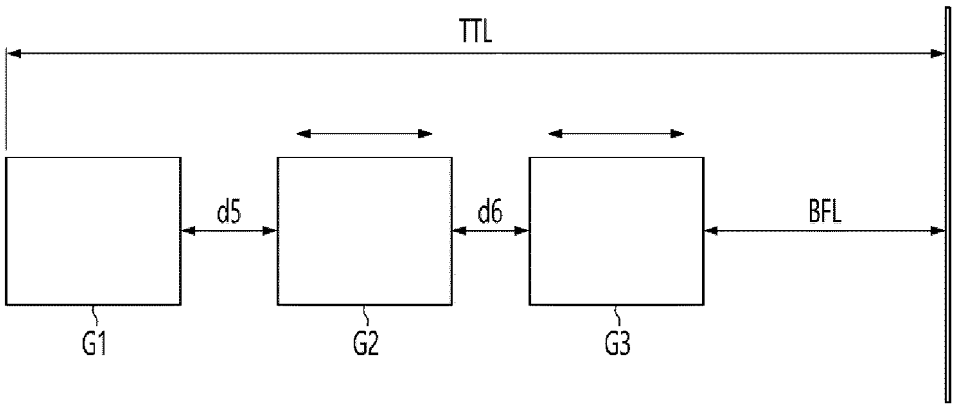
TTL
d5
d6
BFL
G1
G2
G3

【Fig. 7】

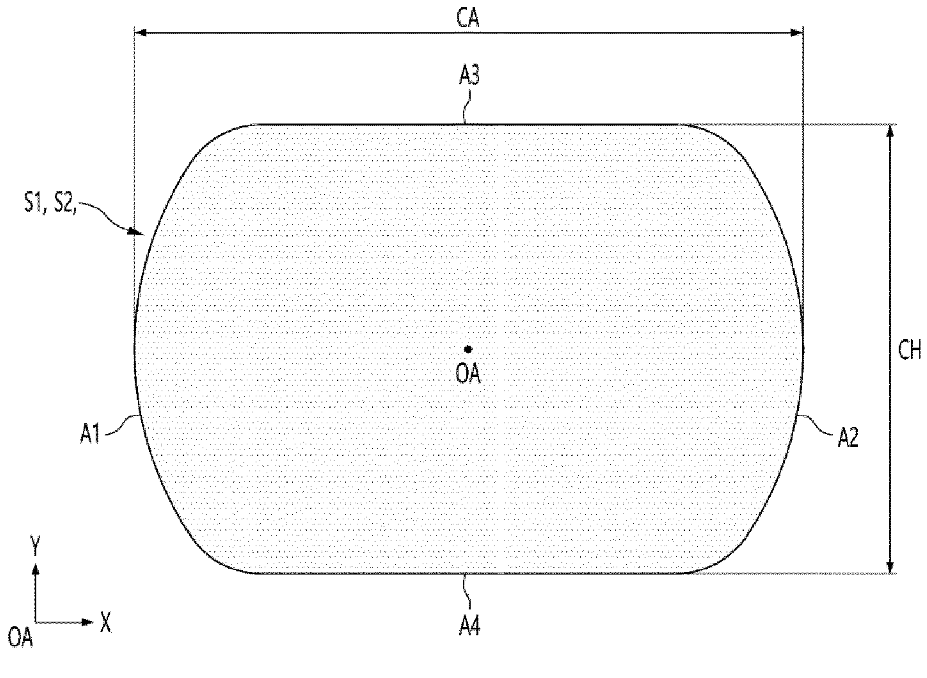

【Fig. 8】

| | Surface | Radius of Curvature (mm) | Thickness and Interval of the lens (mm) | Refractive Index | Abbé's number | Maximum semi clear aperture (x direction, mm) |
|---|---|---|---|---|---|---|
| First lens | First surface | 7.05801 | 1.33327 | 1.5348 | 55.71 | 3.3 |
| | Second surface | 34.79953 | 0.67441 | | | 3.17715 |
| Second lens | Third surface | 16.76977 | 1.26342 | 1.67134 | 19.24 | 2.94629 |
| | Fourth surface | 113.61357 | 0.77725 | | | 2.67677 |
| Third lens | Fifth surface | -9.42569 | 0.6 | 1.85135 | 40.1 | 2.51595 |
| | Sixth surface | 8.75192 | 5.75787 (First mode) | | | 2.45998 |
| | | | 2.97006 (Second mode) | | | |
| | | | 0.41417 (Third mode) | | | |
| Fourth lens | Seventh surface | 3.84474 | 2.4 | 1.4971 | 81.56 | 2.6 |
| | Eighth surface | -8.34711 | 0.15 | | | 2.56734 |
| Fifth lens | Ninth surface | 1692.15455 | 0.75427 | 1.67134 | 19.24 | 2.43185 |
| | Tenth surface | 13.84707 | 3.81817 (First mode) | | | 2.20120 |
| | | | 2.76875 (Second mode) | | | |
| | | | 3.16187 (Third mode) | | | |
| Sixth lens | Eleventh surface | -7.85084 | 2 | 1.67134 | 19.24 | 2.27677 |
| | Twelfth surface | -4.34464 | 0.15 | | | 2.51121 |
| Seventh lens | Thirteenth surface | -5.17005 | 0.92821 | 1.567 | 37.55 | 2.51317 |
| | Fourteenth surface | -10.18177 | 0.69308 | | | 2.43931 |
| Eighth lens | Fifteenth surface | -5.71695 | 0.6 | 1.5348 | 55.71 | 2.37976 |
| | Sixteenth surface | -367.21292 | | | | 2.68628 |

【Fig. 9】

| | Focal length (mm) | Refractive Power | D-cut | Minimum clear aperture after D-cut (mm) |
|---|---|---|---|---|
| First lens | 16.2149 | 0.06167 | O | 2.6 |
| Second lens | 28.8013 | 0.03472 | O | 2.6 |
| Third lens | -5.2197 | -0.1915 | X | - |
| Fourth lens | 5.6498 | 0.1769 | O | 2.1 |
| Fifth lens | -20.5503 | -0.04866 | O | 2.1 |
| Sixth lens | 11.6323 | 0.08596 | O | 2.1 |
| Seventh lens | -19.7357 | -0.05066 | O | 2.1 |
| Eighth lens | -10.8187 | -0.09243 | O | 2.1 |

【Fig. 10】

| | EFL (㎜) | Refractive Power |
|---|---|---|
| First Group | -21.2051 | -0.0471585 |
| Second Group | 6.9622 | 0.1436335 |
| Third Group | -13.7002 | -0.0729917 |

【Fig. 11】

| | TTL(㎜) | Field Of View (°) | EFL (㎜) | BFL (㎜) | Magnification | F number | EPD(㎜) |
|---|---|---|---|---|---|---|---|
| First Mode | 24.50 | 25.92 | 13.40 | 2.60 | 3.99 | 2.85 | 4.92 |
| Second Mode | 24.50 | 17.37 | 20.20 | 6.44 | 6.02 | 3.77 | 5.61 |
| Third Mode | 24.50 | 12.32 | 28.50 | 8.60 | 8.50 | 4.65 | 6.46 |

【Fig. 12】

| | Thickness of Edge (mm)/ Thickness of Optical Axis (mm) | Thickness of Optical Axis (mm)/ Thickness of Edge (mm) |
|---|---|---|
| First lens | 0.4512 | 2.2164 |
| Second lens | 0.8217 | 1.217 |
| Third lens | 2.005 | 0.4988 |
| Fourth lens | 0.4701 | 2.127 |
| Fifth lens | 1.3062 | 0.7656 |
| Sixth lens | 0.7921 | 1.2625 |
| Seventh lens | 1.2732 | 0.7854 |
| Eighth lens | 1.7655 | 0.5664 |

【Fig. 13】

| Field | First Mode | Second Mode | Third Mode |
|---|---|---|---|
| 0 | 0.00 | 0.00 | 0.00 |
| 0.1 | 2.05 | 1.48 | 1.24 |
| 0.2 | 4.09 | 2.96 | 2.42 |
| 0.3 | 6.10 | 4.43 | 3.58 |
| 0.4 | 7.55 | 5.80 | 4.74 |
| 0.5 | 8.92 | 7.04 | 5.90 |
| 0.6 | 10.23 | 8.28 | 7.04 |
| 0.7 | 11.49 | 9.49 | 8.17 |
| 0.8 | 12.68 | 10.68 | 9.29 |
| 0.9 | 13.80 | 11.85 | 10.40 |
| 1.0 | 14.84 | 12.99 | 11.48 |

【Fig. 14】

| Surface# | 1 | 2 | 3 | 4 | 5 | 6 | 7 | 8 |
|---|---|---|---|---|---|---|---|---|
| k= | 1,117E+00 | 5,367E+01 | -3,514E+00 | -9,900E+01 | 3,355E-01 | -6,688E-01 | -5,961E-01 | -9,012E+00 |
| A4= | -1,058E-04 | -1,207E-03 | -1,793E-03 | -1,505E-03 | 1,285E-04 | 1,053E-04 | 4,622E-04 | -3,347E-04 |
| A6= | 1,489E-04 | 1,590E-03 | 2,539E-03 | 3,166E-03 | 1,845E-03 | 7,062E-04 | -1,129E-04 | -3,947E-04 |
| A8= | -1,947E-05 | -6,858E-04 | -1,311E-03 | -2,208E-03 | -2,176E-03 | -1,125E-03 | 7,842E-05 | 9,075E-04 |
| A10= | -5,471E-06 | 1,556E-04 | 3,396E-04 | 7,470E-04 | 1,064E-03 | 6,511E-04 | -3,756E-05 | -5,402E-04 |
| A12= | 2,426E-06 | -2,006E-05 | -4,870E-05 | -1,447E-04 | -2,952E-04 | -2,088E-04 | 1,060E-05 | 1,668E-04 |
| A14= | -3,867E-07 | 1,442E-06 | 3,812E-06 | 1,698E-05 | 5,013E-05 | 4,063E-05 | -2,002E-06 | -3,071E-05 |
| A16= | 3,170E-08 | -4,985E-08 | -1,325E-07 | -1,202E-06 | -5,208E-06 | -4,806E-06 | 2,398E-07 | 3,402E-06 |
| A18= | -1,349E-09 | 2,506E-10 | -4,496E-10 | 4,825E-08 | 3,070E-07 | 3,201E-07 | -1,668E-08 | -2,106E-07 |
| A20= | 2,339E-11 | 2,049E-11 | 1,112E-10 | -8,697E-10 | -7,933E-09 | -9,259E-09 | 5,004E-10 | 5,632E-09 |
| Surface# | 9 | 10 | 11 | 12 | 13 | 14 | 15 | 16 |
| k= | 9,900E+01 | 1,010E+01 | -9,828E+00 | -1,022E+00 | 2,105E+00 | -3,518E+01 | 6,788E-01 | 4,478E+01 |
| A4= | 9,906E-04 | 2,570E-03 | -4,098E-04 | -2,346E-03 | 1,311E-04 | 2,641E-03 | 2,752E-04 | -6,750E-03 |
| A6= | -1,310E-04 | 9,738E-04 | -8,135E-04 | -6,081E-03 | -8,956E-03 | -1,620E-03 | -1,698E-03 | 0,000E+00 |
| A8= | 1,034E-03 | -3,747E-04 | 8,760E-04 | 8,412E-03 | 1,315E-02 | 2,104E-03 | 8,960E-04 | 0,000E+00 |
| A10= | -5,797E-04 | 4,591E-04 | -4,948E-04 | -5,064E-03 | -8,055E-03 | -1,254E-03 | -6,089E-04 | 0,000E+00 |
| A12= | 1,673E-04 | -2,777E-04 | 1,646E-04 | 1,737E-03 | 2,727E-03 | 3,457E-04 | 2,486E-04 | 0,000E+00 |
| A14= | -2,779E-05 | 9,507E-05 | -3,136E-05 | -3,607E-04 | -5,426E-04 | -5,004E-05 | -7,186E-05 | 0,000E+00 |
| A16= | 2,612E-06 | -1,861E-05 | 2,756E-06 | 4,504E-05 | 6,304E-05 | 3,946E-06 | 1,370E-05 | 0,000E+00 |
| A18= | -1,242E-07 | 1,954E-06 | 2,487E-09 | -3,126E-06 | -3,928E-06 | -1,934E-07 | -1,487E-06 | 0,000E+00 |
| A20= | 2,156E-09 | -8,527E-08 | -1,204E-08 | 9,323E-08 | 1,006E-07 | 6,905E-09 | 6,727E-08 | 0,000E+00 |

【Fig. 15】

| Height (mm) | Surface of Lens | | | | | | | |
|---|---|---|---|---|---|---|---|---|
| | 1 | 2 | 3 | 4 | 5 | 6 | 7 | 8 |
| 0 Optical Axis | 0 | 0 | 0 | 0 | 0 | 0 | 0 | 0 |
| 0,1 | 0,000708379 | 0,00014357 | 0,00029797 | 0,000044 | -0,0005304 | 0,00057132 | 0,00130061 | -0,00059887 |
| 0,2 | 0,0028343 | 0,00057314 | 0,00118981 | 0,00017381 | -0,0021218 | 0,00228552 | 0,00520405 | -0,00239385 |
| 0,3 | 0,00638018 | 0,00128578 | 0,0026701 | 0,00038599 | -0,0047735 | 0,00514352 | 0,0117151 | -0,00538015 |
| 0,4 | 0,0113502 | 0,00227823 | 0,00473246 | 0,00067700 | -0,0084830 | 0,00914734 | 0,0208418 | -0,00955011 |
| 0,5 | 0,0177508 | 0,00354907 | 0,00737253 | 0,00104719 | -0,0132448 | 0,0143002 | 0,032595 | -0,0148931 |
| 0,6 | 0,0255904 | 0,0051008 | 0,010591 | 0,00150307 | -0,0190506 | 0,0206061 | 0,0469885 | -0,0213951 |
| 0,7 | 0,0348808 | 0,00694153 | 0,0143952 | 0,00205758 | -0,0258921 | 0,0280679 | 0,0640383 | -0,0290368 |
| 0,8 | 0,0456365 | 0,00908563 | 0,0187992 | 0,00272738 | -0,0337646 | 0,0366854 | 0,0837669 | -0,0377921 |
| 0,9 | 0,0578757 | 0,0115531 | 0,0238211 | 0,00352751 | -0,0426729 | 0,0464527 | 0,106194 | -0,047626 |
| 1 | 0,0716202 | 0,0143678 | 0,0294786 | 0,00446431 | -0,0526357 | 0,057357 | 0,131347 | -0,0584941 |
| 1,1 | 0,0868958 | 0,0175543 | 0,0357838 | 0,00552877 | -0,0636867 | 0,0693791 | 0,159254 | -0,0703441 |
| 1,2 | 0,103731 | 0,0211347 | 0,0427374 | 0,00669258 | -0,0758732 | 0,0824958 | 0,189946 | -0,0831199 |
| 1,3 | 0,12216 | 0,0251259 | 0,0503256 | 0,00790861 | -0,0892495 | 0,0966836 | 0,223457 | -0,0967667 |
| 1,4 | 0,142216 | 0,0295373 | 0,0585192 | 0,00911703 | -0,103869 | 0,111922 | 0,25982 | -0,111239 |
| 1,5 | 0,163939 | 0,0343708 | 0,0672776 | 0,0102562 | -0,119778 | 0,128196 | 0,29907 | -0,126503 |
| 1,6 | 0,187369 | 0,039623 | 0,0765556 | 0,011276 | -0,137011 | 0,145495 | 0,341239 | -0,142548 |
| 1,7 | 0,21255 | 0,0452984 | 0,0863138 | 0,0121508 | -0,155593 | 0,163807 | 0,386355 | -0,159378 |
| 1,8 | 0,239531 | 0,0513643 | 0,0965286 | 0,0128871 | -0,17555 | 0,183118 | 0,434436 | -0,177023 |
| 1,9 | 0,268363 | 0,0578546 | 0,1072 | 0,0135248 | -0,196917 | 0,203405 | 0,48549 | -0,195538 |
| 2,0 | 0,299104 | 0,064772 | 0,118354 | 0,0141294 | -0,219747 | 0,224635 | 0,539503 | -0,215008 |
| 2,1 | 0,33182 | 0,0721367 | 0,130042 | 0,0147836 | -0,24411 | 0,246768 | 0,59643 | -0,235576 |
| 2,2 | 0,366583 | 0,0799701 | 0,142328 | 0,0155795 | -0,270082 | 0,26976 | 0,656174 | -0,257444 |
| 2,3 | 0,403471 | 0,0882943 | 0,155282 | 0,0166275 | -0,297779 | 0,293568 | 0,718563 | -0,280911 |
| 2,4 | 0,442566 | 0,0970671 | 0,168975 | 0,0180896 | -0,32725 | 0,318146 | 0,783301 | -0,306386 |
| 2,5 | 0,483947 | 0,106266 | 0,18349 | 0,0202443 | -0,358605 | | 0,849894 | -0,334402 |
| 2,6 | 0,527681 | 0,115773 | 0,198902 | 0,023575 | | | 0,917549 | |
| 2,7 | 0,573814 | 0,12541 | 0,215423 | | | | | |
| 2,8 | 0,622352 | 0,134923 | 0,233362 | | | | | |
| 2,9 | 0,673236 | 0,143966 | 0,253255 | | | | | |
| 3,0 | 0,726311 | 0,152092 | | | | | | |
| 3,1 | 0,781267 | 0,158732 | | | | | | |
| 3,2 | 0,837556 | | | | | | | |
| 3,3 | 0,894264 | | | | | | | |

【Fig. 16】

| Height (mm) | Surface of Lens | | | | | | | |
|---|---|---|---|---|---|---|---|---|
| | 9 | 10 | 11 | 12 | 13 | 14 | 15 | 16 |
| 0 (Optical Axis) | 0 | 0 | 0 | 0 | 0 | 0 | 0 | 0 |
| 0.1 | 0.000003 | 0.00036139 | -0.0006366 | -0.0011510 | -0.0009673 | -0.0004904 | -0.0008746 | -0.000014 |
| 0.2 | 0.000013 | 0.00144936 | -0.0025445 | -0.0046074 | -0.0038732 | -0.0019537 | -0.0034998 | -0.000065 |
| 0.3 | 0.000035 | 0.00327553 | -0.0057173 | -0.0103302 | -0.0087314 | -0.0043670 | -0.0078793 | -0.00017722 |
| 0.4 | 0.000073 | 0.00586042 | -0.0101456 | -0.0184326 | -0.0155718 | -0.0076939 | -0.0140217 | -0.00039067 |
| 0.5 | 0.000137247 | 0.00923485 | -0.0158172 | -0.0289323 | -0.0244434 | -0.0118869 | -0.0219418 | -0.00076231 |
| 0.6 | 0.000242846 | 0.013442 | -0.0227183 | -0.0418395 | -0.0354108 | -0.0168879 | -0.0316639 | -0.00136505 |
| 0.7 | 0.000412578 | 0.0185403 | -0.0308332 | -0.0572381 | -0.0485399 | -0.0226282 | -0.0432244 | -0.00228799 |
| 0.8 | 0.000682073 | 0.0246067 | -0.0401436 | -0.0752225 | -0.0638776 | -0.0290284 | -0.0566748 | -0.00363644 |
| 0.9 | 0.00110393 | 0.0317419 | -0.0506283 | -0.095695 | -0.0814348 | -0.0359986 | -0.072087 | -0.00553192 |
| 1 | 0.00175127 | 0.0400759 | -0.0622629 | -0.11871 | -0.101181 | -0.0434445 | -0.089559 | -0.00811213 |
| 1.1 | 0.00271931 | 0.0497745 | -0.0750205 | -0.144239 | -0.12306 | -0.0512786 | -0.109225 | -0.011531 |
| 1.2 | 0.00412468 | 0.0610457 | -0.0888732 | -0.172245 | -0.147019 | -0.05944 | -0.131268 | -0.0159586 |
| 1.3 | 0.00610266 | 0.0741461 | -0.103794 | -0.202703 | -0.173043 | -0.0679185 | -0.155938 | -0.0215813 |
| 1.4 | 0.00880401 | 0.089389 | -0.119757 | -0.235608 | -0.201169 | -0.0767786 | -0.183573 | -0.0286016 |
| 1.5 | 0.0123931 | 0.107157 | -0.136743 | -0.270972 | -0.231467 | -0.0861749 | -0.214623 | -0.0372382 |
| 1.6 | 0.0170489 | 0.127919 | -0.154743 | -0.308801 | -0.263973 | -0.0963511 | -0.249685 | -0.047726 |
| 1.7 | 0.0229695 | 0.152257 | -0.173766 | -0.349061 | -0.298605 | -0.107621 | -0.289527 | -0.0603161 |
| 1.8 | 0.0303778 | 0.180898 | -0.193857 | -0.391662 | -0.335094 | -0.120338 | -0.335127 | -0.0752759 |
| 1.9 | 0.0395248 | 0.21475 | -0.215118 | -0.436452 | -0.372898 | -0.134887 | -0.387727 | -0.0928889 |
| 2.0 | 0.0506897 | 0.254967 | -0.237736 | -0.483233 | -0.411292 | -0.151722 | -0.44897 | -0.113455 |
| 2.1 | 0.0641758 | 0.303064 | -0.262059 | -0.53175 | -0.449176 | -0.171501 | -0.521205 | -0.13729 |
| 2.2 | 0.0803181 | 0.361098 | -0.2889 | -0.581593 | -0.484778 | -0.195294 | -0.608075 | -0.164725 |
| 2.3 | 0.0995258 | | | -0.631924 | -0.514881 | -0.224685 | -0.715341 | -0.19611 |
| 2.5 | | | | -0.724325 | -0.534001 | | | -0.272202 |
| 2.6 | | | | | | | | |
| 2.7 | | | | | | | | |
| 2.8 | | | | | | | | |
| 2.9 | | | | | | | | |
| 3.0 | | | | | | | | |
| 3.1 | | | | | | | | |
| 3.2 | | | | | | | | |
| 3.3 | | | | | | | | |

【Fig. 17】

| Lens | D cut ratio (CH/CA) |
|---|---|
| First lens | 0.79 |
| Second lens | 0.88 |
| Fourth lens | 0.81 |
| Fifth lens | 0.86 |
| Sixth lens | 0.84 |
| Seventh lens | 0.84 |
| Eighth lens | 0.78 |

【Fig. 18】

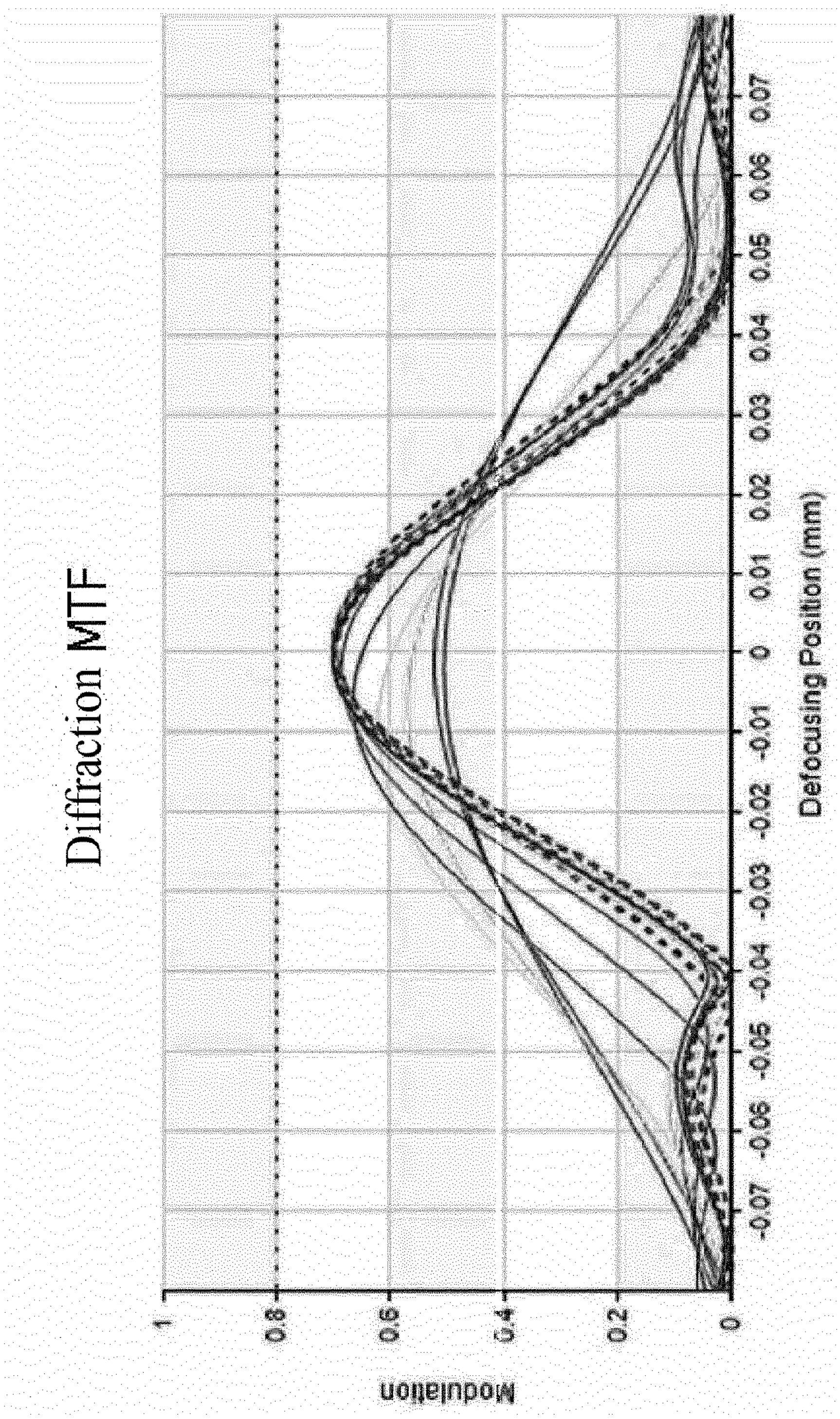
Diffraction MTF
Modulation
1
0.8
0.6
0.4
0.2
0
Defocusing Position (mm)
-0.07
-0.06
-0.05
-0.04
-0.03
-0.02
-0.01
0
0.01
0.02
0.03
0.04
0.05
0.06
0.07

【Fig. 19】

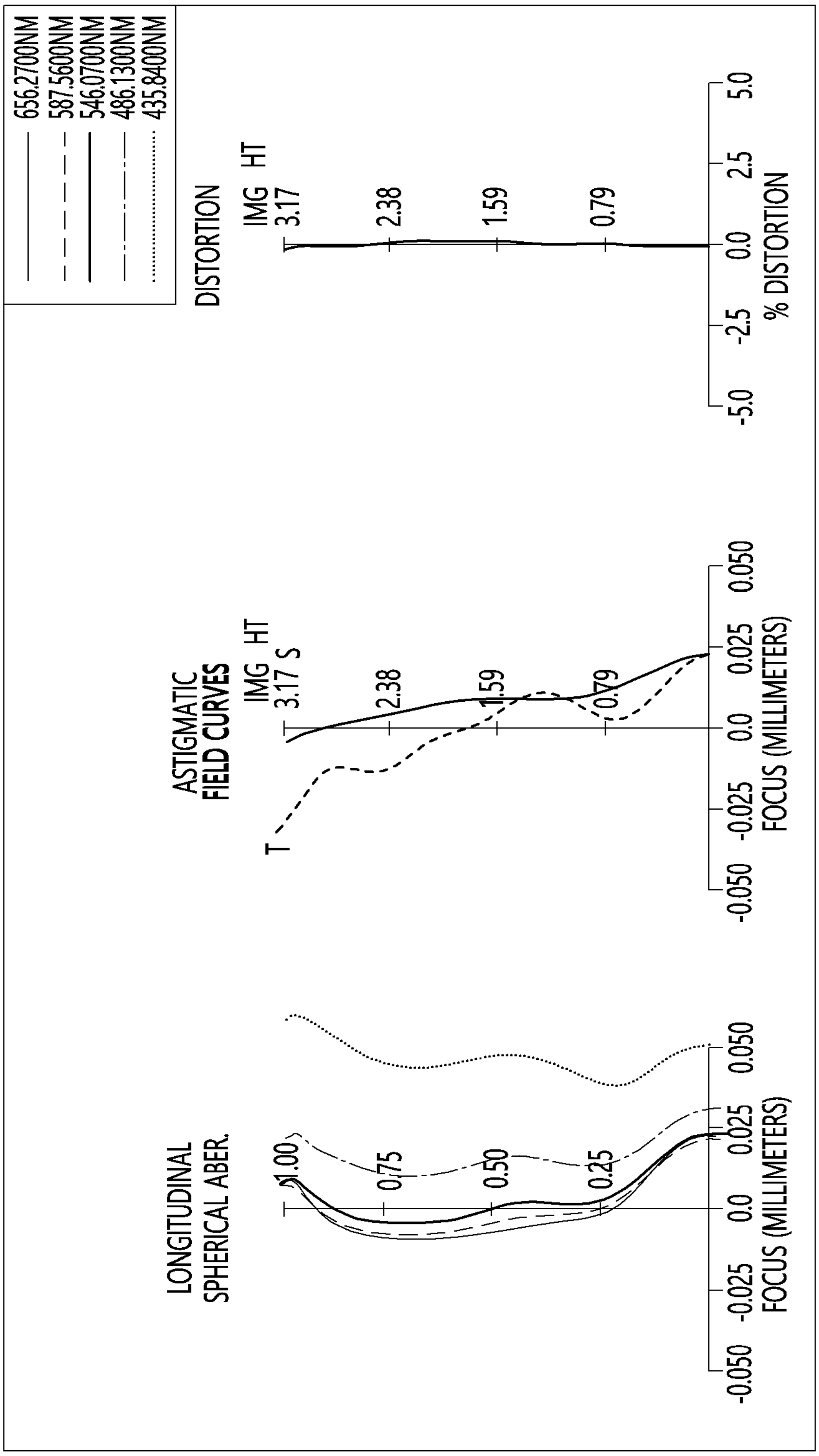
656.2700NM
587.5600NM
546.0700NM
486.1300NM
435.8400NM
LONGITUDINAL
SPHERICAL ABER.
FOCUS (MILLIMETERS)
ASTIGMATIC
FIELD CURVES
IMG HT
FOCUS (MILLIMETERS)
DISTORTION
IMG HT
% DISTORTION

【Fig. 20】

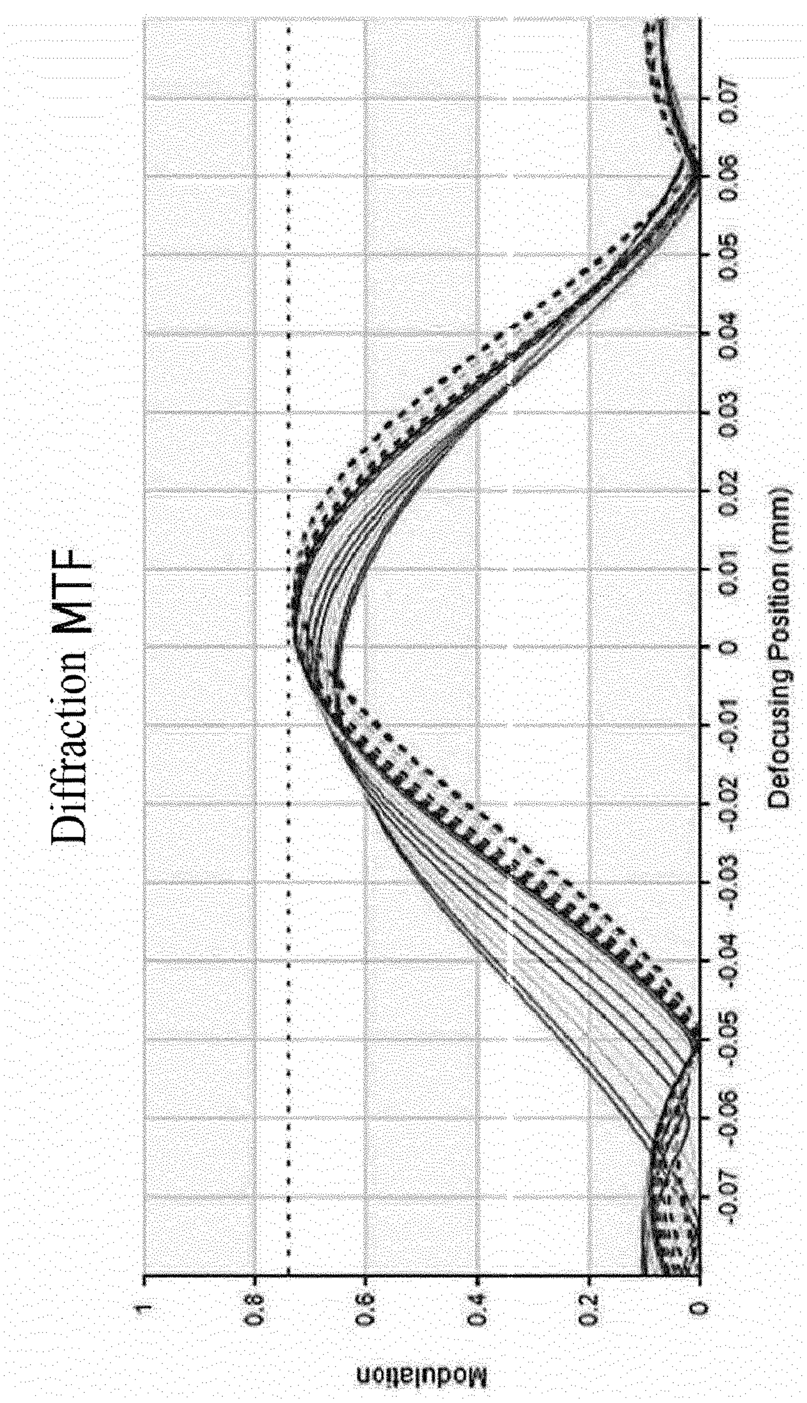
Diffraction MTF
Modulation
1
0.8
0.6
0.4
0.2
0
-0.07
-0.06
-0.05
-0.04
-0.03
-0.02
-0.01
0
0.01
0.02
0.03
0.04
0.05
0.06
0.07
Defocusing Position (mm)

【Fig. 21】

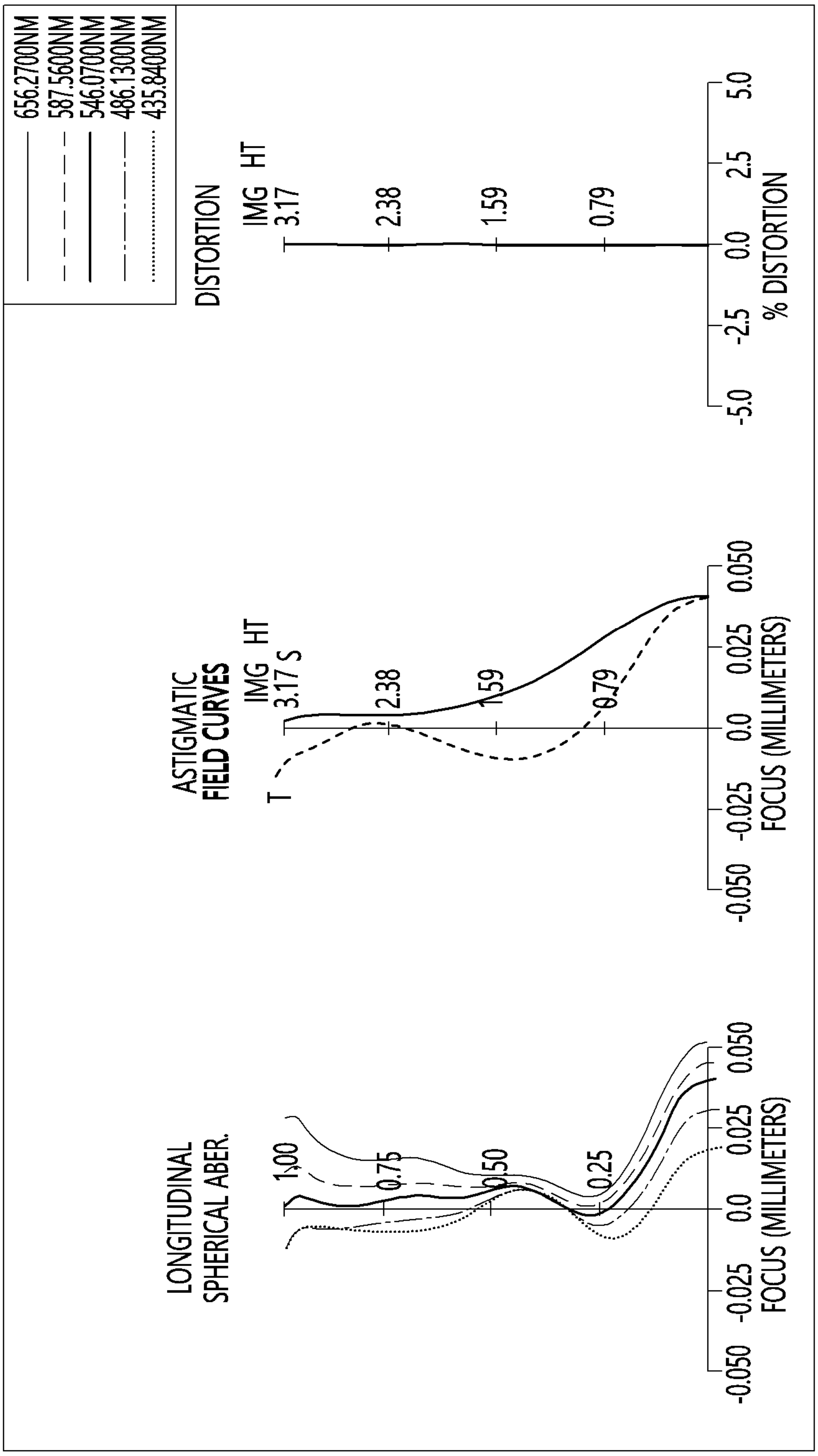
656.2700NM
587.5600NM
546.0700NM
486.1300NM
435.8400NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
3.17 S
T
2.38
1.59
0.79
-0.050 -0.025 0.0 0.025 0.050
FOCUS (MILLIMETERS)
DISTORTION
IMG HT
3.17
2.38
1.59
0.79
-5.0 -2.5 0.0 2.5 5.0
% DISTORTION

【Fig. 22】

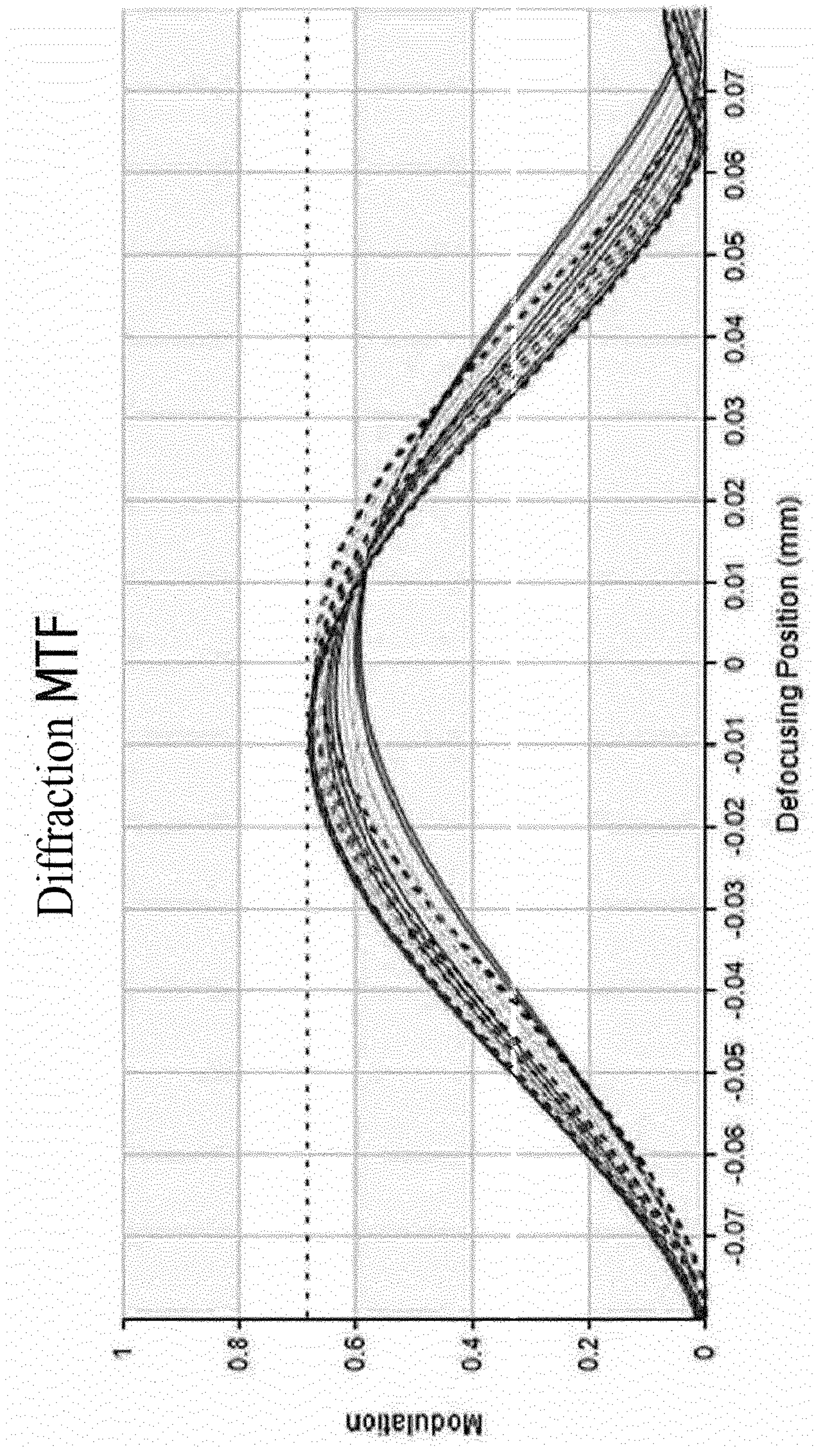
Diffraction MTF
Modulation
Defocusing Position (mm)
0
0.2
0.4
0.6
0.8
1
-0.07
-0.06
-0.05
-0.04
-0.03
-0.02
-0.01
0
0.01
0.02
0.03
0.04
0.05
0.06
0.07

【Fig. 23】

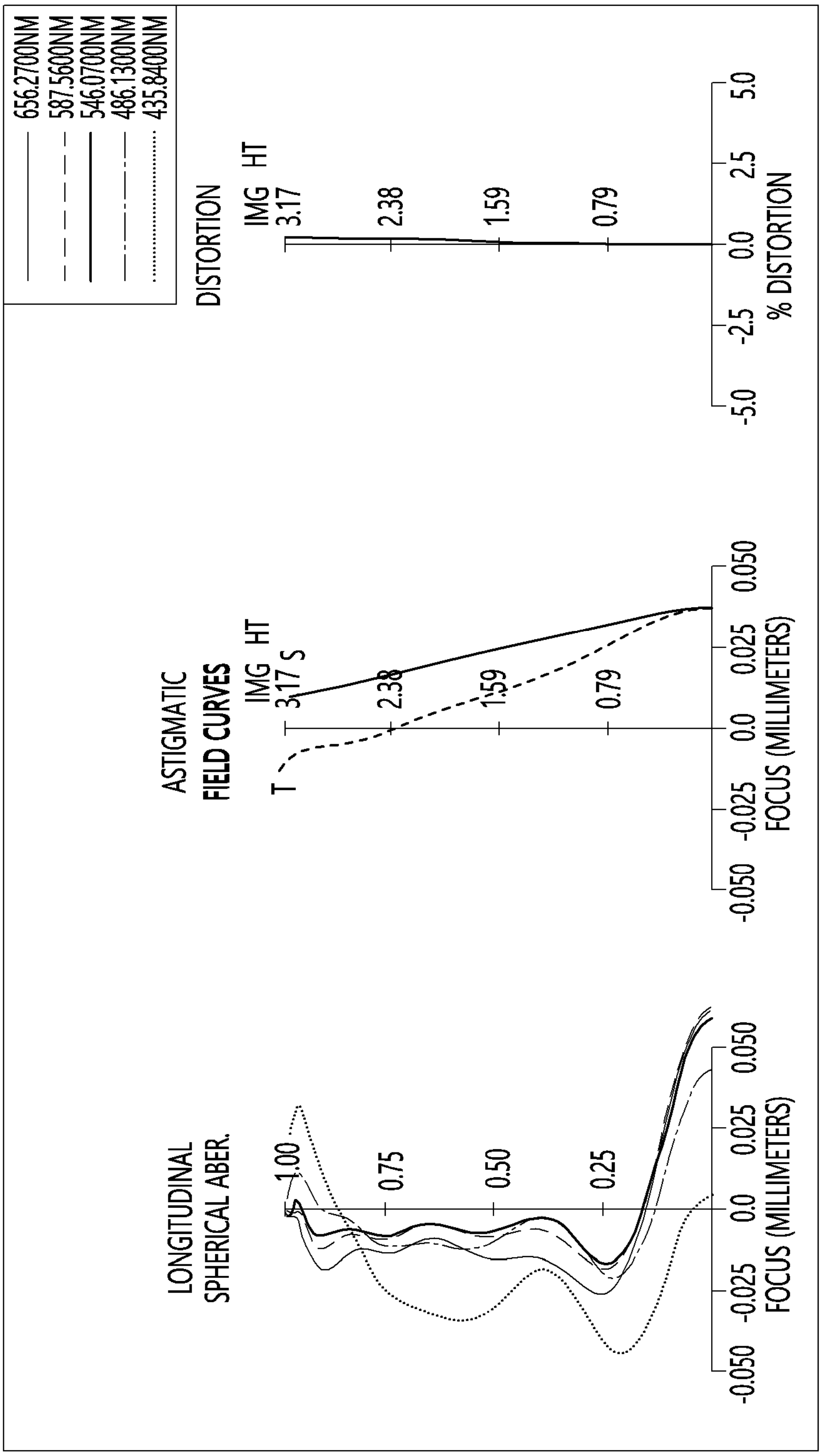
656.2700NM
587.5600NM
546.0700NM
486.1300NM
435.8400NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
IMG HT
3.17 S
T
2.38
1.59
0.79
-0.050 -0.025 0.0 0.025 0.050
FOCUS (MILLIMETERS)
DISTORTION
IMG HT
3.17
2.38
1.59
0.79
-5.0 -2.5 0.0 2.5 5.0
% DISTORTION

【Fig. 24】

| | Surface | Radius of Curvature (mm) | Thickness and Interval of the lens (mm) | Refractive Index | Abbé's number |
|---|---|---|---|---|---|
| First lens | First surface | 6.7886 | 1.2661 | 1.5348 | 55.7083 |
| | Second surface | 33.2018 | 0.9964 | | |
| Second lens | Third surface | 36.0453 | 1.2649 | 1.6713 | 19.2425 |
| | Fourth surface | -31.5330 | 0.5031 | | |
| Third lens | Fifth surface | -9.7102 | 0.7000 | 1.8513 | 40.1038 |
| | Sixth surface | 8.2690 | 5.6820 (First mode) | | |
| | | | 2.9840 (Second mode) | | |
| | | | 0.4068 (Third mode) | | |
| Fourth lens | Seventh surface | 3.8043 | 2.1757 | 1.4971 | 81.5584 |
| | Eighth surface | -7.4533 | 0.1000 | | |
| Fifth lens | Ninth surface | -14.0165 | 1.5086 | 1.6355 | 23.9714 |
| | Tenth surface | 91.7948 | 3.4852 (First mode) | | |
| | | | 2.5792 (Second mode) | | |
| | | | 2.9106 (Third mode) | | |
| Sixth lens | Eleventh surface | -9.2772 | 1.9826 | 1.6713 | 19.2425 |
| | Twelfth surface | -5.5850 | 0.1000 | | |
| Seventh lens | Thirteenth surface | -8.4738 | 0.5000 | 1.5348 | 55.7083 |
| | Fourteenth surface | 29.2910 | 0.9214 | | |
| Eighth lens | Fifteenth surface | 123.9932 | 0.6140 | 1.5348 | 55.7083 |
| | Sixteenth surface | 9.9877 | | | |

【Fig. 25】

| | Focal length (mm) | Refractive Power | D-cut | Clear aperture after D-cut (mm) |
|---|---|---|---|---|
| First lens | 15.63 | 0.06399 | O | 6.5000 |
| Second lens | 24.94 | 0.04009 | O | 57018 |
| Third lens | -5.12 | -0.19520 | O | 5.0438 |
| Fourth lens | 5.40 | 0.18521 | O | 5.2000 |
| Fifth lens | -18.84 | -0.05306 | O | 4.9979 |
| Sixth lens | 16.97 | 0.058939 | O | 4.8999 |
| Seventh lens | -12.18 | -0.08209 | O | 4.8556 |
| Eighth lens | -20.26 | -0.04935 | O | 4.8556 |

【Fig. 26】

| | Length(mm) | Sign of Refractive Power | Average of Clear aperture |
|---|---|---|---|
| First Group | 4.73 | - | 5.375 |
| Second Group | 3.78 | + | 5.12 |
| Third Group | 4.12 | - | 5.05 |

【Fig. 27】

| | TTL (㎜) | Field Of View (°) | EFL (㎜) | BFL (㎜) | F number | EPD (㎜) | TD (㎜) | Max CRA |
|---|---|---|---|---|---|---|---|---|
| First Mode | 24.50 | 25.88 | 13.40 | 2.70 | 2.74 | 4.88 | 21.80 | 15.74 |
| Second Mode | 24.50 | 17.38 | 20.12 | 6.44 | 2.74 | 5.40 | 18.19 | 13.61 |
| Third Mode | 24.50 | 12.27 | 28.51 | 8.60 | 2.74 | 6.37 | 15.95 | 11.83 |

【Fig. 28】

| | Thickness of Edge (mm)/ Thickness of Optical Axis (mm) | Thickness of Optical Axis (mm)/ Thickness of Edge (mm) |
|---|---|---|
| First lens | 0.4132 | 2.4199 |
| Second lens | 0.8335 | 1.1997 |
| Third lens | 1.8854 | 0.5303 |
| Fourth lens | 0.4072 | 2.4556 |
| Fifth lens | 1.1814 | 0.8464 |
| Sixth lens | 0.8596 | 1.1632 |
| Seventh lens | 1.8314 | 0.5460 |
| Eighth lens | 1.4395 | 0.6946 |

【Fig. 29】

| Lens | D-cut ratio (CH/CA) |
|---|---|
| First lens | 0.63 |
| Second lens | 0.65 |
| Third lens | 0.66 |
| Fourth lens | 0.59 |
| Fifth lens | 0.61 |
| Sixth lens | 0.63 |
| Seventh lens | 0.61 |
| Eighth lens | 0.60 |

【Fig. 30】

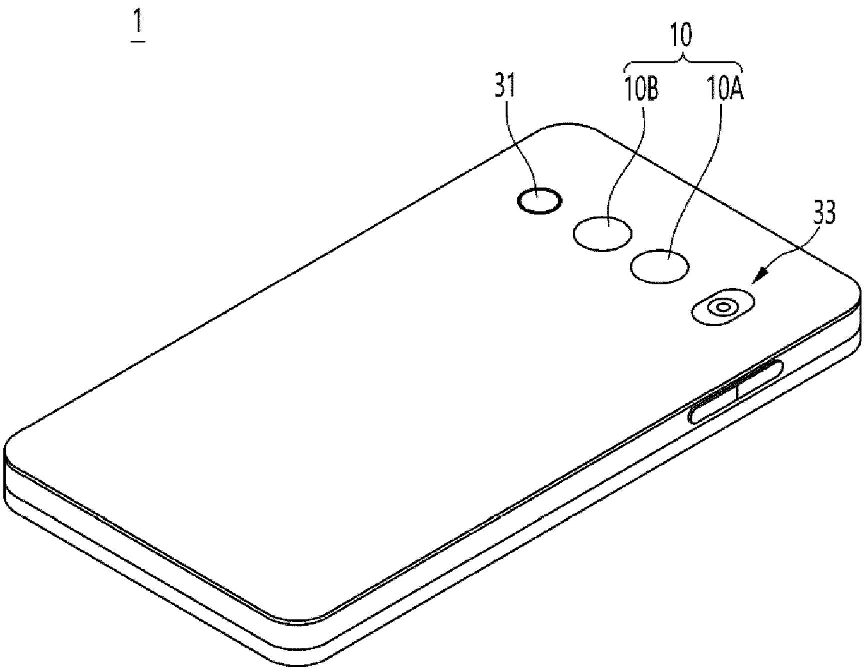

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4806003 A